# EUROPÄISCHE PATENTSCHRIFT

(11) **EP 3 919 586 B1**
(45) Veröffentlichungstag und Bekanntmachung des Hinweises auf die Patenterteilung: **13.09.2023**
(21) Anmeldenummer: 20178360.2
(22) Anmeldetag: 04.06.2020
(51) Int. Cl.: C10B 3/02, C10B 53/02, C10B 1/04, C10B 57/16, C10B 47/16, C10B 47/20

(54) **VORRICHTUNG ZUR HERSTELLUNG VON PFLANZENKOHLE DURCH PYROLYSE VON BIOMASSE**
DEVICE FOR PRODUCING VEGETABLE CHARCOAL BY PYROLYSIS OF BIOMASS
DISPOSITIF DE FABRICATION DE CHARBON VÉGÉTAL PAR PYROLYSE DE LA BIOMASSE

(43) Veröffentlichungstag der Anmeldung: 08.12.2021
(73) Patentinhaber: Schuster, Reimund, 89561 Dischingen (DE)
(72) Erfinder: SCHUSTER, Reimund, 89561 Dischingen (DE)
(74) Vertreter: Rüger Abel Patentanwälte PartGmbB

(56) Entgegenhaltungen:
- EP-A1- 0 621 331
- WO-A1-2014/198180
- WO-A1-2017/207104
- CN-A- 108 822 880
- CN-A- 109 575 967
- DE-A1-102009 026 895
- US-A- 3 377 266
- US-A1- 2016 265 847

## Beschreibung

Die vorliegende Erfindung betrifft eine Vorrichtung zur Herstellung von Pflanzenkohle durch Pyrolyse von Biomasse.

Pflanzenkohle wird zunehmend in der Landwirtschaft als Bodenverbesserer und Trägerstoff für Düngemittel und Mikrohabitat für Mikroorganismen, wie Bakterien und Pilze, als Hilfsstoff für die Kompostierung und Nährstofffixierung von Gülle, als Futtermittelzusatz und Nahrungsergänzungsmittel verwendet. Auch in anderen Industriezweigen, wie in der Medizin, zur Gebäudedämmung, als Energieträger für Heizkraftwerke und Industrieanlagen, etc. wird Pflanzenkohle zunehmend eingesetzt.

Pflanzenkohle kann unter anderem durch Pyrolyse unter Luftabschluss bei Temperaturen zwischen etwa 400°C und 1000°C hergestellt werden, indem pflanzliche Ausgangsstoffe, wie Holz, Stroh, an Land wachsende Pflanzen, Biomasse, Reststoffe aus Biogasanlagen oder dgl., durch pyrolytische Verkohlung in ein poröses Kohlenstoffprodukt mit hohem Kohlenstoffanteil umgewandelt werden. Die Pyrolyse erfolgt unter Sauerstoffabschluss (anaerob), um eine Verbrennung zu verhindern, wobei Wasser aus der Biomasse abgespaltet und die Biomasse zersetzt wird, indem organische Verbindungen durch die hohe Temperatur bei der Pyrolyse thermisch gespaltet werden. Es entstehen Pflanzenkohle, Pyrolysegas, auch Synthesegas genannt, und Wärme sowie Asche. Mineralstoffe der ursprünglichen Biomasse werden in den Poren und an der Oberfläche der Pflanzenkohle gebunden. Dies kommt der Verwendung der Pflanzenkohle als Bodenverbesserer zugute.

Wird die Pflanzenkohle in landwirtschaftliche Böden eingearbeitet, bleibt ein hoher Anteil des Stoffes der Pflanzenkohle für eine lange Zeit von über 1000 Jahren stabil, so dass das assimilierte Kohlenstoffdioxid langfristig der Atmosphäre entzogen werden kann. Dadurch kann Pflanzenkohle einen wichtigen Beitrag zur Reduktion der Klimaerwärmung leisten.

Neben einem hohen Kohlegehalt, einem hohen Verkohlungsgrad und einer guten Stabilität der Pflanzenkohle ist eine hohe Porosität der erzeugten Pflanzenkohlestückchen besonders wichtig, damit eine große spezifische Oberfläche zur Aufnahme von Wasser, Nährstoffen und dgl. bereitgestellt wird. Die Porosität, Aufnahmekapazität und der Vorkohlungsgrad der erzeugten Pflanzenkohle sind von den Pyrolysebedingungen, wie der Prozesstemperatur und der Verweildauer der Biomasse in der Pyrolysekammer, der Art der verwendeten Biomasse, ihrem Feuchtegrad und ihrer Partikelgröße, und anderen Faktoren abhängig. Der Pyrolyseprozess muss abhängig von den gegebenen Faktoren sorgfältig gewählt bzw. eingestellt werden, um eine hohe Qualität der erzeugten Pflanzenkohle sicherzustellen.

WO 2017/207104 A1 offenbart eine Vorrichtung zur kontinuierlichen Herstellung von Pflanzenkohle durch Pyrolyse von Biomasse unter Sauerstoffabschluss mit mindestens einem vertikal aufgestellten Reaktor, der eine obere Abdeckung mit einer Zuführvorrichtung für Biomasse, eine untere Entnahmevorrichtung für Pflanzenkohle, eine Ausleiteinrichtung für Pyrolysegas sowie eine innenliegende Heizeinrichtung aufweist. Die Heizeinrichtung enthält mehrere innerhalb des Reaktors vertikal angeordnete Heizstäbe, die in der Nähe der Reaktorwand um den Umfang verteilt angeordnet sind. In einer Ausführungsform sind acht Heizstäbe in gleichmäßigem Umfangsabstand vorgesehen, wobei die Länge der Heizstäbe in etwa der halben Höhe des Reaktors entspricht. Die Heizstäbe sind an der oberen Abdeckung des Reaktors befestigt, um die obere Hälfte des Reaktorinnenraums zu beheizen.

Die bekannte Vorrichtung ermöglicht einen kontinuierlichen Betrieb, bei dem die entstandene Pflanzenkohle dem Reaktor ständig entnommen wird, während von oben Biomasse nachgefüllt wird, die dann unter Schwerkraft entlang der Heizstäbe nach unten wandert und dabei zu Pflanzenkohle pyrolysiert wird. Nach Passieren der Heizstäbe wird die entstehende Pflanzenkohle abgekühlt und über die untere Entnahmevorrichtung abgeführt.

Die mehreren in Umfangsrichtung verteilten Heizstäbe ermöglichen die Einstellung einer geeigneten Prozesstemperatur in dem Reaktorinnenraum. Es kann aber trotz der mehreren Heizstäbe schwierig sein, optimale Prozessbedingungen, insbesondere eine jeweils geeignete Temperaturverteilung in dem gesamten Reaktorinnenraum, zur passenden Behandlung des Materials sicherzustellen. Es wäre eine gleichmäßige Temperaturverteilung in horizontaler Richtung quer durch den Reaktorinnenraum sowie eine allmähliche Temperaturzunahme in Tiefenrichtung nach unten zur gleichmäßigen, langsamen Erhöhung des Verkohlungsgrades von Vorteil. Ein derartiges Temperaturprofil, das zudem an die jeweiligen Prozessbedingungen angepasst ist, lässt sich mit der Heizeinrichtung der vorbekannten Pyrolysevorrichtung nicht immer erreichen.

Außerdem besteht die Gefahr, dass in der Mitte des Reaktors, bezogen auf den Reaktormantel, Materialstücke der Biomasse oder der entstehenden Pflanzenkohle einfach durchfallen, ohne hinreichend behandelt worden zu sein, so dass die resultierende Pflanzenkohle dort einen zu geringeren Verkohlungsgrad aufweisen kann. Dies wird auch als Trichterbildung bezeichnet. Eine derartige Trichterbildung kann auch bei Pflanzenkohlereaktoren auftreten, die eine innere Heizeinrichtung in Form einer Heizwendel verwenden, die sich spiralförmig um den Umfang des Reaktors zunehmend nach unten erstreckt. Jedenfalls ist eine Trichterbildung in einem vertikal aufgestellten Pyrolysereaktor mit einer allein durch Schwerkraft wanderden Biomasse, wenn keine inneren Einrichtungen die Fließgeschwindigkeit der Biomasse steuern, zu vermeiden.

Außerdem sollte eine Pyrolysevorrichtung einen möglichst guten Luftsauerstoffabschluss sicherstellen. Ein Sauerstoffeintrag kann zur Verbrennung, minderwertiger Kohle mit hohem Aschegehalt und daraus resultierendem hohem Masseverlust führen.

EP 0 621 331 A1 beschreibt eine Vorrichtung zur Verkokung von Altreifengranulat mit wenigstens einem Doppelrohrofen, in dem das Granulat zur Verkokung mittels einer Förderschnecke durch eine Heizzone nach oben transportiert wird. Der Doppelrohrofen umfasst ein äußeres Mantelrohr mit inneren Schlitzböden, zwischen denen Kamm-Mitnehmer für das Granulat angeordnet sind, und eine an das äußere Mantelrohr angeschweißte ringförmigen Erweiterung eines horizontalen Rauchgaskanals, die von einem Edelstahlwendelbett ausgefüllt und mit zwölf temperaturgesteuerten Heizstäben in Keramikschutzhüllen versehen ist.

WO 2014/198180 A1 beschreibt eine Vorrichtung zur Behandlung von organischem Material, die einen Pyrolysevergaser und eine Trockendestillationsgaswaschvorrichtung umfasst. Der Pyrolysevergaser weist Materialeinlass an seinem oberen Teil und einen Gasauslass mit einer Materialaustragsöffnung an seinem unteren Teil auf. Mehrere Trockendestillationschammern sind stromabwärts des Pyrolysevergasers angeordnet und mit einer elektrischen Heizvorrichtung versehen.

US 3 377 266 A beschreibt eine Pyrolysevorrichtung zur Wiedergewinnung von Schieferöl durch Destillation von Schieferölgestein mit einem vertikal aufgestellten Reaktor, einem Einfülltrichter zur Zuführung von zerkleinertem Ölschiefer zu dem Reaktorinnenraum am oberen Ende des Reaktors, eine Entnahmevorrichtung zur Entnahme des pyrolysierten Schiefermaterials aus dem Reaktorinnenraum durch ein unteres Ende des Reaktors, einer in einer Destillationszone des Reaktorinnenraums positionierten Heizeinrichtung und einer Steuereinrichtung zur Steuerung der Heizeinrichtung zur Regelung der Temperatur in der Destillationszone. Die Heizeinrichtung umfasst eine Mehrzahl von elektrischen Widerstandsheizelementen, die in der Destillationszone parallel und beabstandet zueinander angeordnet und mit der Längsachse und Tiefenrichtung des Reaktors, somit der Bewegungsrichtung des Schiefermaterials durch die Destillationszone ausgerichtet sind. Jedes Heizelement ist durch einen länglichen zylindrischen Stab aus einem metallischen Material mit einem Außenmantel aus Schamotte oder Keramik gebildet. Jedes Heizelement weist ein unteres Gewindeende auf, das in einem von mehreren Gewindesockeln befestigt wird, die in gleichmäßig voneinander beabstandeten Intervallen in einem Montagerahmen vorgesehen sind.

Es besteht weiterhin ein Bedarf nach einer Pyrolysevorrichtung zur Herstellung von Pflanzenkohle unter Luftabschluss, die an variierende Betriebs- und Umgebungsbedingungen anpassbar ist und die Einstellung jeweils geeigneter Prozessbedingungen in dem Reaktorinnenraum ermöglicht.

Ausgehend hiervon ist es eine Aufgabe der Erfindung, die Unzulänglichkeiten herkömmlicher Pyrolysevorrichtungen zu vermeiden und eine neue Vorrichtung zur kontinuierlichen Herstellung von Pflanzenkohle durch Pyrolyse von Biomasse unter Sauerstoffabschluss zu schaffen, die wenigstens einige der vorerwähnten Ziele erfüllt. Insbesondere sollte die Vorrichtung eine Anpassbarkeit der Prozesstemperaturen und Temperaturverteilungen und der Verweildauer der Biomasse in dem Reaktorinnenraum in Abhängigkeit von variierenden Betriebs- und Umgebungsbedingungen und der verwendeten Biomasse auf einfache Weise ermöglichen und die Gefahr einer Trichterbildung mit unzureichender Verkohlung der Biomasse reduzieren. Außerdem sollte ein guter Sauerstoffabschluss ermöglicht sein.

Diese Aufgabe wird durch die Vorrichtung mit den Merkmalen des unabhängigen Anspruchs 1 gelöst.

Die erfindungsgemäße Vorrichtung zur kontinuierlichen Herstellung von Pflanzenkohle durch Pyrolyse von Biomasse unter Sauerstoffabschluss weist einen vertikal aufgestellten Reaktor auf, der einen durch einen Reaktormantel umgrenzten Reaktorinnenraum mit einem oberen Zuführbereich, einem unteren Entnahmebereich und einem dazwischen befindlichen Prozessraum aufweist. Die Vorrichtung weist ferner eine Zuführungsvorrichtung zur Zuführung von Biomasse zu dem Reaktorinnenraum in den oberen Zuführbereich, eine Entnahmevorrichtung zur Entnahme von Pflanzenkohle aus dem Reaktorinnenraum aus dem unteren Entnahmebereich und eine in dem Reaktorinnenraum positionierte Heizeinrichtung auf. Die Heizeinrichtung weist eine Anordnung von Heizstäben auf, zu der mehrere äußere Heizstäbe, die in der Nähe des Reaktormantels um den Umfang des Reaktors verteilt vertikal angeordnet sind, und wenigstens ein innerer Heizstab gehören, der näher an der Mitte des Reaktorinnenraums bezogen auf den Reaktormantel vertikal angeordnet ist. Jeder Heizstab von den mehreren äußeren Heizstäben und dem wenigstens einen inneren Heizstab weist zwei oder mehrere längliche Heizstabelemente auf, die in Längsrichtung oder Höhenrichtung des Reaktors hintereinander, in Serie angeordnet und in ihrer Heizleistung individuell regelbar sind. Die Vorrichtung weist ferner eine Steuereinrichtung zur Steuerung des Betriebs der Vorrichtung, einschließlich der Betätigung der Zuführungsvorrichtung und der Entnahmevorrichtung und zur Steuerung der Temperatur der einzelnen Heizstabelemente der Heizstäbe auf.

Die Erfindung sieht zusätzlich zu mehreren äußeren Heizstäben, die in der Nähe des Reaktormantels vertikal angeordnet sind, ferner einen oder mehrere innere, zentrale Heizstäbe auf, die in oder nahe an der Mitte oder dem Zentrum des Reaktors positioniert sind. Der oder die inneren Heizstäbe und die äußeren Heizstäbe können in Kombination miteinander in durch die Steuereinrichtung gesteuerter Weise beheizt werden, um eine gewünschte und je nach gegebenen Betriebs- und Umgebungsbedingungen und der verwendeten Biomasse erforderliche Temperaturverteilung in dem Reaktorinnenraum zu schaffen, damit stets eine optimale Behandlung oder Verkohlung der Biomasse ermöglicht wird. Bspw. kann eine in horizontaler Richtung, quer durch den Reaktor gleichmäßige Temperatur erreicht werden. Es können auch unterschiedliche Temperaturprofile vorgegeben werden. Der oder die inneren Heizstäbe wirken auch einem ungewollten Durchfallen der Biomassematerialstücke in der Mitte des Reaktors entgegen, so dass eine Trichterbildung vermieden werden kann.

Die erfindungsgemäße Vorrichtung ist zur kontinuierlichen Herstellung von Pflanzenkohle eingerichtet und geeignet, wobei Biomasse fortdauernd zugeführt, zu Pflanzenkohle umgesetzt und entnommen oder abgeführt werden kann, ohne dass der Prozess unterbrochen werden muss. Als Biomasse können Holzschnitzel, Holzabfälle, Agrarabfälle, Stroh, Pflanzen, Früchte und dgl., aber auch Klärschlamm, Mikroalgen, Wasserpflanzen, etc. verwendet werden. Durch den erhöhten Grad an Kontrolle oder Steuerbarkeit der Temperatur und anderer Prozessbedingungen kann Biomasse unterschiedlicher Art, mit unterschiedlichen Feuchtegraden und Temperaturen auch bei variierenden Umgebungstemperaturen optimal behandelt werden. Das Wanderbett aus Biomasse wandert allein durch Schwerkraft nach unten bis zu der Entnahmevorrichtung. Irgendwelche Transportvorrichtungen sind hierzu nicht erforderlich. Die sinkende Biomasse wirkt als eine Art Biofilter für das entstehende und im Gegenstrom aufwärts strömende Pyrolysegas.

Es kann eine hochporöse Pflanzenkohle mit hoher spezifischer Oberfläche und einem hohen Kohlenstoffanteil von über 90 Gew.-%, vorzugsweise über 95 Gew.-%, erzeugt werden. Außerdem kann durch die Vorrichtung und die Steuerung der Prozessbedingungen ein sehr geringer Anteil an schädlichen polyzyklischen aromatischen Kohlenwasserstoffen (PAK) in der Pflanzenkohle von weniger als 4 mg/kg, sogar weniger als 2 mg/kg, erreicht werden.

In vorteilhaften Ausführungsformen kann der Reaktor rohrförmig, als hohler Kreiszylinder ausgebildet und vertikal aufgestellt sein. Die äußeren Heizstäbe können dann in einer kreisförmigen, bezogen auf die Reaktormitte punktsymmetrischen Anordnung in der Nähe des kreiszylindrischen Mantels positioniert sein, was in Verbindung mit dem wenigstens einen inneren Heizstab die Erreichung einer gleichmäßigen Temperaturverteilung in radialer, horizontaler Richtung fördert. Falls mehrere innere Heizstäbe vorhanden sind, sind diese vorzugsweise ebenfalls auf einem Kreis mit einem geringeren Durchmesser, näher an der Mitte des Reaktorinnenraums positioniert.

Jeder äußere und innere Heizstab kann mittels elektrischer Energie beheizbar und individuell in seiner Heizleistung regelbar sein. Die Steuereinrichtung kann zur individuellen Steuerung oder Regelung der Heizleistung jedes einzelnen der Heizstäbe eingerichtet sein. Insbesondere kann die Steuereinrichtung die zugeführte elektrische Energie für jeden einzelnen Heizstab je nach Bedarf und Prozessbedingungen einstellen, steuern oder regeln.

In vorteilhaften Ausführungsformen weist die Heizeinrichtung wenigstens vier, vorzugsweise wenigstens sechs oder acht äußere Heizstäbe auf, die in gleichmäßigem Umfangsabstand zueinander angeordnet sein können, und sie weist wenigstens zwei, vorzugsweise wenigstens drei oder vier innere Heizstäbe auf, die ebenfalls vorzugsweise in gleichmäßigem Umfangsabstand angeordnet sein können. Es können z.B. zwei kreisförmige Ringanordnungen von Heizstäben, ein zentraler Ring und ein äu-ßerer Ring, die konzentrisch zueinander angeordnet sind, vorgesehen sein. Je nach Größe, insbesondere Breite oder dem Durchmesser, der Vorrichtung kann eine beliebige Anzahl von äußeren und inneren Heizstäben verwendet werden.

In besonders bevorzugten Ausführungsformen entspricht die Anzahl der äußeren Heizstäbe wenigstens der doppelten Anzahl der inneren Heizstäbe, wobei wenigstens einige, vorzugsweise alle der inneren Heizstäbe zu den äußeren Heizstäben in Umfangsrichtung versetzt angeordnet sein können. Dann ist eine gute Kontrolle über eine gleichmäßige Temperierung in dem Innenraum möglich. In vorteilhaften Ausführungsformen können z.B. doppelt so viele äußere wie innere Heizstäbe verwendet werden, wobei die inneren Heizstäbe um den halben Winkelabstand der äußeren Heizstäbe in Bezug auf diese versetzt, also in Umfangsrichtung in etwa in der Mitte zwischen jeweils zwei äußeren Heizstäben angeordnet sind. Dies ergibt eine für die Temperierung des Innenraums geeignete symmetrische Anordnung.

In vorteilhaften Ausführungsformen können die Heizstäbe mittels Montageeinrichtungen an einer oberen Abdeckung des Reaktorinnenraums oder an einer oder mehreren Seitenwänden in dem oberen Zuführbereich des Reaktorinnenraums befestigt sein und freihängend in den Reaktorinnenraum hineinragen. Die äußeren und inneren Heizstäbe erstrecken sich dann freihängend jeweils in der Nähe und entlang einer Reaktorinnenwand des Reaktormantels bzw. in der Nähe der Mitte des Reaktorinnenraums. Zusätzliche Aufhänge- oder Trägereinrichtungen für die Heizstäbe in dem Reaktorinnenraum sind nicht erforderlich, so dass ein Fließen des Wanderbetts in dem Reaktorinnenraum dadurch nicht behindert wird. Die Montageeinrichtungen können vorteilhafterweise auch die elektrischen Anschlüsse enthalten, die einerseits über externe Versorgungsleitungen mit einer externen Energiequelle zur Energieversorgung der Heizstäbe und andererseits mit den einzelnen Heizstäben elektrisch verbunden sind. Diese Anordnung ist äußerst kompakt und übersichtlich.

In einer Weiterbildung können die bspw. durch die obere Abdeckung bzw. die Montageeinrichtungen herausgeführten oberen Endabschnitte zumindest des wenigstens einen inneren Heizstabs oder auch der äußeren Heizstäbe zur Seite nach außen umgebogen sein. In Ausführungsformen, in denen die Heizstäbe durch wenigstens eine Seitenwand des oberen Zuführbereichs herausgeführt sind, sind vorzugsweise die oberen Endabschnitte sowohl der äußeren Heizstäbe als auch des oder der inneren Heizstäbe nach außen umgebogen bzw. gekrümmt. Indem die Herausführungen wenigstens der inneren Heizstäbe von der Mitte des Reaktors weg nach außen, z.B. radial nach außen umgebogen sind, wird in der Mitte des Reaktors eine größere Zugangsöffnung freigelassen, durch die die Biomasse dem Reaktor nahezu unbehindert zugeführt werden kann.

Die Krümmung der oberen Endabschnitte der Heizstäbe und die Aufnahmeöffnungen bzw. Montageeinrichtungen für die Heizstäbe an der oberen Abdeckung oder der bzw. den Seitenwänden des oberen Zuführbereiches können derart eingerichtet und aufeinander abgestimmt sein, dass die Heizstäbe im Ganzen von au-ßen durch die Aufnahmeöffnungen bzw. Montageeinrichtungen in den Reaktorinnenraum eingeführt und montiert werden können und Montagearbeiten von innen oder innerhalb des Reaktorinnenraums nicht erforderlich sind.

In vorteilhaften Ausführungsformen weist die Vorrichtung mehrere Temperatursensoren zur Messung der Temperaturen an verteilten Stellen in dem Reaktorinnenraum auf. Die Temperatursensoren sind vorzugsweise an vielen Stellen in dem Reaktorinnenraum verteilt vorgesehen und mit der Steuereinrichtung verbunden, die dann den Betrieb der Vorrichtung in Abhängigkeit von den Temperaturmesswerten steuert. Insbesondere kann die Steuereinrichtung die Temperaturen in allen mit Temperatursensoren versehenen Bereichen des Reaktorinnenraums auf einen gewünschten Wert präzise regeln. Vorzugsweise ist jedem durch einen inneren Heizstab und die nächsten benachbarten äu-ßeren Heizstäbe definierten Bereich oder Sektor des Reaktorinnenraums wenigstens ein Temperatursensor zugeordnet.

In besonders bevorzugten Ausführungsformen ist jedem Heizstab wenigstens ein Temperatursensor zur Messung der Temperatur in der Nähe des Heizstabs zugeordnet. Die Temperatursensoren können an den Heizstäben befestigt, also von diesen getragen sein. Dies ermöglicht eine individuelle Temperaturregelung für jeden einzelnen Heizstab und eine einfache Handhabung.

Es können vorteilhafterweise zusätzlich mehrere Temperatursensoren unterhalb der Heizstäbe in der Nähe der Entnahmevorrichtung angeordnet sein, um die Temperatur der erzeugten Pflanzenkohle vor der Entnahme zu messen. Derartige Temperatursensoren können als Fortsatz der Heizstäbe ausgebildet oder an einem solchen angebracht sein. Die Überwachung der Temperatur des Endproduktes kann der Qualitätssicherung dienen, um eine ausreichende Verweildauer bei einer bestimmten Temperatur sicherzustellen. Wenn z.B. die gemessene Temperatur des Endproduktes deutlich unterhalb der Solltemperatur liegt, kann dies ein erfolgtes Durchrutschen der Biomasse anzeigen. In diesem Fall können verschiedene Maßnahmen getroffen werden, um die Gefahr einer Trichterbildung nahezu auszuschließen oder zumindest stark zu reduzieren. Bspw. kann hierzu die Verteilung der Pflanzenkohle quer durch den Reaktorinnenraum oder das Durchlassen der Pflanzenkohle zu dem Entnahmebereich mittels einer integrierte steuerbaren Verteilvorrichtung beeinflusst und/oder die Entnahme der Pflanzenkohle und Nachfüllung von Biomasse verzögert werden, um eine längere Verweildauer zur Erhöhung des Verkohlungsgrades zu erzwingen.

Gemäß der Erfindung weist jeder Heizstab zwei oder mehrere, vorzugsweise drei längliche Heizstabelemente aufweisen, die in Längsrichtung oder Höhenrichtung des Reaktors hintereinander, in Serie angeordnet und in ihrer Heizleistung individuell regelbar sind. Jeder innere und äußere Heizstab bildet also eine Heizstabanordnung von zwei oder drei oder mehreren übereinander angeordneten Heizstäben. Dadurch kann ein gewünschtes Temperaturprofil auch in Längs- bzw. Höhenrichtung des Reaktors vorgegeben und präzise geregelt werden. Jedem Heizstabelement ist vorzugsweise ein dedizierter Temperatursensor zugordnet.

Die Steuereinrichtung kann derart eingerichtet sein, dass sie die Heizleistung der übereinander liegenden Heizstabelemente im Betrieb derart regelt, dass in Tiefenrichtung nach unten eine zunehmend höhere Temperatur des Reaktorinnenraums und in der Nähe der Entnahmevorrichtung eine niedrigere Abkühltemperatur eingestellt wird. Es können so wenigstens zwei, vorzugsweise drei oder sogar mehrere Heizzonen oder Bereiche zunehmender Heizleistung bzw. Temperatur in Tiefenrichtung in dem Reaktorinnenraum geschaffen werden, um das Biomaterial während der Verweildauer in dem Reaktorinnenraum und auf seinem Wanderweg nach unten langsam, zunehmend stärker zu pyrolysieren.

Ein erster, oberster Bereich kann z.B. auf eine Temperatur von etwa 100-200°C, insbesondere etwa 150°C, eingestellt bzw. geregelt werden, um die zugeführte Biomasse zu trocknen bzw. zu entfeuchten. Ein weiterer, zweiter Bereich darunter kann auf ca. 200-600°C, insbesondere 300-500°C eingestellt werden, um eine Entgasung in dem mittleren Bereich des Reaktors zu ermöglichen. Ein weiterer, dritter Bereich darunter kann auf ca. 500-900°C, insbesondere 700-800°C, eingestellt bzw. geregelt werden, um eine zunehmende pyrolytische Umwandlung (Verkohlung) der Biomasse zu Pflanzenkohle in diesem Bereich zu bewirken. Ein letzter, darunter liegender Abkühlbereich kann auf ca. 100-200°C, insbesondere etwa 150°C, eingestellt werden, um eine Abkühlung der fertig erzeugten Pflanzenkohle auf eine für die Entnahme geeignete Temperatur zu ermöglichen.

Die Schaffung unterschiedlicher Prozess- oder Heizzonen in Höhenrichtung des Reaktors führt auch dazu, dass das entstehende Pyrolysegas, das sehr explosiv oder entzündlich ist, beim Durchgang durch die verschiedenen Heizzonen zunehmend abgekühlt wird, so dass es nicht mehr explosionsfähig ist, wenn es den Gasdom in dem oberen Zuführbereich erreicht, aus dem das Pyrolysegas dann ausgeleitet wird.

Vorteilhafterweise wirkt die nachgefüllte, kühlere Biomasse als eine Art Biofilter, um das entstehende Pyrolysegas und Asche, etc., die nach oben steigen, zu filtern. Die Asche wird dabei herausgefiltert und am Austreten in die Atmosphäre durch eine Ausleiteinrichtung für Pyrolysegas gemeinsam mit diesem gehindert.

Um die Aufrechterhaltung der eingestellten Temperaturen in dem Reaktorinnenraum zu fördern und den Bedarf an elektrischer Energie einzusparen, kann der Reaktormantel im Bereich der Heizzonen mit einer thermischen Isolierung versehen sein.

Wenn z.B. die Heizeinrichtung drei innere und acht äußere, insgesamt also 11 Heizstabanordnungen mit jeweils drei übereinander angeordneten, einzeln regelbaren bzw. mit elektrischer Energie beheizbaren Heizstabelementen aufweist, dann können insgesamt 11 x 3 = 33 Bereiche durch die Heizstabelemente oder zwischen denen festgelegt werden, die individuell geeignet temperiert werden können. Dies ermöglicht es, einzelne Heizstabelemente stärker zu beheizen, wenn in deren Nähe eine zu niedrige Temperatur gemessen wird, die z.B. auf ein Durchrutschen der Biomasse zurückgeführt werden kann.

In einer Ausführungsform, die einen besonders wirksamen Luftabschluss ermöglicht, kann die Zuführungsvorrichtung eine Eintragsschleuse aufweisen, und die untere Entnahmevorrichtung kann eine Austragsschleuse aufweisen. Die Steuereinrichtung kann eingerichtet sein, um die Eintragsschleuse und die Austragsschleuse derart zu betätigen, dass sie zeitlich versetzt zueinander, abwechselnd geöffnet werden und nie beide Schleusen zur gleichen Zeit geöffnet sind. Der Lufteintrag durch die Schleusen kann auf ein Minimum reduziert werden. Die Verwendung der Schleusen kann im Vergleich zu einfachen Verschlussdeckeln, -klappen oder sonstigen Verschlusselementen die Dichtheit der Vorrichtung deutlich erhöhen.

In einer Realisierung können die Eintragsschleuse und die Austragsschleuse abschließbare Behälter mit einem definierten Volumen zur Zuführung bzw. Entnahme einer definierten Menge an Biomasse bzw. Pflanzenkohle bilden und jeweils einen ersten und zweiten verstellbaren Schieber aufweisen, die in Höhenrichtung im Abstand zueinander angeordnet sind und zwischeneinander einen abschließbaren Schleusenraum definieren. Die Schieber können schwenkbar oder verschiebbar oder in sonstiger Weise bewegbar sein, um einen Durchgang zu öffnen oder zu sperren. Die Verstellung kann vorzugsweise pneumatisch oder auch elektrisch betätigt erfolgen. Es können Schiebeplatten, Klappen, Ventile oder sonstige Mittel verwendet werden, die geöffnet und geschlossen werden können. Jedenfalls ist die Steuereinrichtung eingerichtet, um den ersten und den zweiten verstellbaren Schieber derart zu betätigen, um sie zeitlich versetzt zueinander, abwechselnd, nie gleichzeitig geöffnet werden. Durch eine derartige gesteuerte und abgestimmte Betätigung der Schieber jeder von der Eintragsschleuse und der Austragsschleuse kann eine weitgehend absolute Dichtheit erreicht werden, so dass kein oder kaum Luftsauerstoffeintrag in den Reaktorinnenraum erfolgt.

Es kann, falls gewünscht, ein Inertgas, wie Kohlendioxid oder Stickstoff, über eine Zuleitung in den Schleusenraum eingeblasen werden, um den Lufteintritt zusätzlich zu hemmen und die Gefahr einer Verbrennung in dem Reaktorinnenraum weiter zu reduzieren.

Ansonsten kann der Reaktorinnenraum frei von bewegten Teilen sein. Insbesondere enthält der Reaktorinnenraum vorzugsweise keine bewegten Teile, wie Rührwerke, Förderschnecken, Schichtschieber, etc., die dem Transport der behandelten Biomasse nach unten während des Pyrolyseprozesses dienen. Der Transport wird allein durch die Schwerkraft bewirkt, indem das Wanderbett aus der behandelten Biomasse durch Schwerkraft zunehmend nach unten fließt, wobei die Fließgeschwindigkeit durch die Betätigung der Schleusen gesteuert werden kann.

Die Steuereinrichtung kann vorteilhafterweise eine Steuerlogik aufweisen, die eingerichtet ist, um die Verweildauer der behandelten Biomasse in dem Reaktorinnenraum als Funktion der geregelten Heiztemperatur der Heizstäbe in Abhängigkeit von in dem Reaktorinnenraum verteilt gemessenen Temperaturen unter Anpassung der Betätigung der Zuführungsvorrichtung und der Entnahmevorrichtung zu steuern. Allein durch eine geeignete Regelung der Heizstabtemperaturen und eine entsprechend angepasste Betätigung der Schleusen kann die Steuereinrichtung eine Pyrolyse mit homogenen Pflanzenkohleendprodukten auch bei variierenden Biomassenmaterialien, Feuchtegraden und Temperaturen der Biomasse, bei verschiedenen Umgebungstemperaturen, etc., vorzugsweise vollkommen automatisiert durchführen. Es kann sichergestellt werden, dass die Biomaterialmasse ausreichend lange Zeit bei der gewünschten Temperatur in jeder Temperaturzone behandelt wird, ohne überhitzt zu werden, was insgesamt die Basis für eine qualitativ hochwertige Pflanzenkohle mit gewünschter Partikelgröße, hohem Verkohlungsgrad, hohem Kohlenstoffgehalt, geringem Aschegehalt, geringem PAK-Anteil, hoher Porosität und großer spezifischer Oberfläche bildet. Zur Steuerung der erforderlichen oder gewünschten Verweildauer der behandelten Biomasse in dem Reaktorinnenraum können noch weitere gemessene Parameter, wie z.B. der gemessene Unterdruck in dem oberen Zuführbereich, der durch das Absaugen des entstehenden Pyrolysegases erzeugt wird, oder die Temperatur bei der Verbrennung des Pyrolysegases, herangezogen werden.

Insbesondere kann die Vorrichtung eine Ausleiteinrichtung für Pyrolysegas enthalten, die in einem Gasdom in dem oberen Zuführbereich angeordnet und bspw. mit einem Sauggebläse oder dgl. verbunden sein kann, um in dem Gasdom einen Unterdruck zu erzeugen. Dann kann in den Gasdom gegebenenfalls eintretende Luft gemeinsam mit dem Pyrolysegas wirksam ausgeleitet werden. Durch diese zusätzliche Maßnahme kann die Gefahr eines Lufteintritts in den Reaktorinnenraum mit den damit verbunden Nachteilen, wie Verbrennung, Masseverlust, minderwertige Kohle mit hohem Aschegehalt, etc., weiter reduziert werden.

In vorteilhafter Weiterbildung kann eine beliebige vorstehen erwähnte Vorrichtung in dem Entnahmebereich oder in dessen Nähe eine steuerbare Verteilvorrichtung zur Verteilung der Pflanzenkohle in Querrichtung, also über die Breite des Reaktorinnenraums aufweisen, wobei die Verteilvorrichtung hierzu zwei oder mehrere individuell ansteuerbare und motorisch bewegbare Verteilermittel aufweisen kann. Die Verteilermittel können insbesondere durch mehrere, z.B. vier, parallel zueinander angeordnete Verteilerschnecken gebildet sein, die einzeln angesteuert und vorzugsweise motorisch in beide Drehrichtungen angetrieben werden können, um die Pflanzenkohle je nach Bedarf zu einer Seitenwand oder zur Mitte des Entnahmebereichs hin zu verlagern. Außerdem kann der Massendurchsatz an Pflanzenkohle zu dem Entnahmebereich hin gesteuert werden. Jedenfalls kann einer beginnenden Trichterbildung effektiv entgegengewirkt werden. Abgesehen von der Verteilvorrichtung weist der Reaktor keine bewegten Teile, wie Rührwerke, Förderschnecken, Schichtschieber, etc., auf, die dem Transport der behandelten Biomasse nach unten während des Pyrolyseprozesses dienen.

Weitere vorteilhafte Einzelheiten von Ausführungsformen der Erfindung ergeben sich aus Unteransprüchen, der Zeichnung sowie der zugehörigen Beschreibung. In der Zeichnung sind keinesfalls beschränkende Ausführungsbeispiele des Gegenstands der Erfindung dargestellt. Soweit möglich, werden in allen Figuren die gleichen Bezugszeichen verwendet, um die gleichen Bestandteile bzw. Komponenten zu bezeichnen, wobei dann, soweit nichts anderes bestimmt ist, die Ausführungen für alle Figuren entsprechend gelten. Es zeigen:
Figur 1 eine schematische Ansicht einer Vorrichtung zur Herstellung von Pflanzenkohle durch Pyrolyse gemäß einer Ausführungsform der Erfindung;
Figur 2 eine teilweise im Längsschnitt dargestellte Seitenansicht der Vorrichtung nach Figur 1, in einer vereinfachten Darstellung;
Figur 3 eine Querschnittsansicht der Vorrichtung nach Figur 1, geschnitten entlang der Linie I-I in Figur 2, in vereinfachter Darstellung;
Figur 4 eine Querschnittsansicht der Vorrichtung nach Figur 1, geschnitten entlang der Linie II-II in Figur 2, in vereinfachter Darstellung;
Figur 5 eine Längsschnittansicht durch die Vorrichtung nach Figur 1, ähnlich der Figur 2, aber in verbreiterter schematisierter Darstellung, zur Veranschaulichung und Erläuterung der Funktionsweise;
Figur 6 eine schematische Ansicht einer Vorrichtung zur Herstellung von Pflanzenkohle durch Pyrolyse gemäß einer weiteren, bevorzugten Ausführungsform der Erfindung;
Figur 7 eine Draufsicht auf Vorrichtung nach Figur 6, in vereinfachter Darstellung; und
Figur 8 eine teilweise im Längsschnitt dargestellte Seitenansicht der Vorrichtung nach Figur 1, in einer vereinfachten Darstellung.

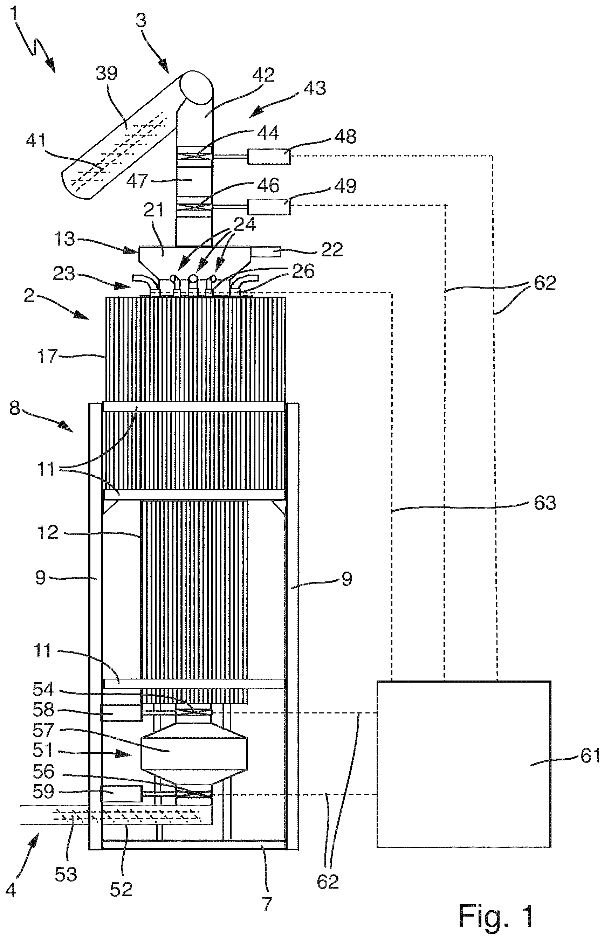

Figur 1 zeigt eine erfindungsgemäße Vorrichtung 1 zur Herstellung von Pflanzenkohle durch Pyrolyse von Biomasse unter Sauerstoffabschluss gemäß einer beispielhaften Ausführungsform der Erfindung in einer stark schematisierten Gesamtdarstellung. Die Vorrichtung 1 umfasst hier einen Reaktor 2, in dem im Betrieb eine pyrolytische Umsetzung von Biomasse zu Pflanzenkohle erfolgt, eine Zuführungsvorrichtung 3 zur Zuführung von Biomasse zu dem Reaktor 2 und eine Entnahmevorrichtung 4 zur Abführung der erzeugten Pflanzenkohle aus dem Reaktor 2. Der Reaktor 2 ist ein rohrförmiger Reaktor, der vertikal aufgestellt ist. Eine Stützkonstruktion 8, die vertikale Träger 9, horizontale Stützstreben 11 sowie hier nicht näher veranschaulichte Querverstrebungen aufweist, hält den Reaktor 2 freihängend in der vertikalen Stellung. Die vertikalen Träger 9 der Stützkonstruktion 8 erstrecken sich bis zu der Bodenplatte 7 und stützen sich gegen hier nicht näher dargestellten Boden an dem Aufstellungsort der Vorrichtung 1 ab. Der Reaktor 2 könnte zusätzlich mittels Bodenträgern an dem Boden abgestützt sein, wobei aber die freihängende Anordnung aufgrund von im Betrieb auftretenden thermischen Ausdehnungen und Kontraktionen und Vibrationen des Reaktors bevorzugt wird.

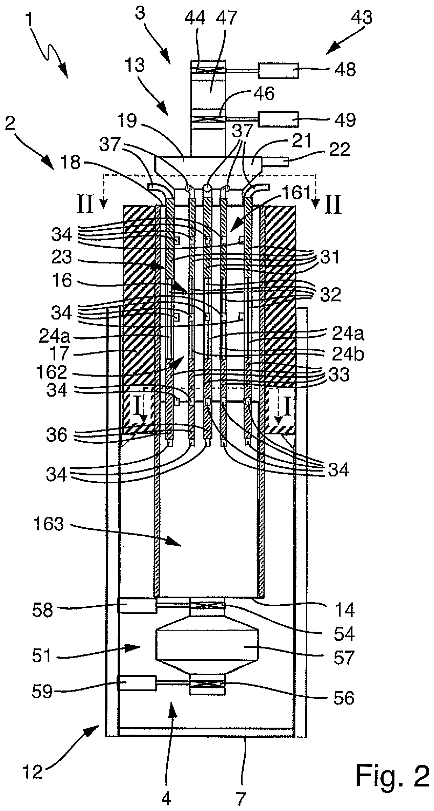

Der Reaktor 2, wie er in Figur 1 in Seitenansicht dargestellt ist, ist in den Figuren 2-4 im Längsschnitt sowie in verschiedenen Querschnittsansichten näher dargestellt. Der Reaktor 2 weist in der hier dargestellten bevorzugten Ausführungsform einen rohrförmigen Mantel 12, der die Form eines kreisförmigen Hohlzylinders aufweist, eine obere Abdeckung 13, die an dem oberen Ende des Reaktors 2 angeordnet ist, und einen unteren Boden 14 auf. Die obere Abdeckung 13, der Mantel 12 und der untere Boden 14 definieren gemeinsam einen Reaktorinnenraum 16, nachfolgend auch einfach als Innenraum 16 bezeichnet, in dem die pyrolytische Umsetzung der Biomasse stattfindet. Der Reaktorinnenraum 16 erstreckt sich in Höhenrichtung ausgehend von einem oberen Zuführbereich 161 zur Zuführung von Biomasse, über einen Prozessraum 162 für die Pyrolysebehandlung der Biomasse bis zu einem unteren Entnahmebereich 163 zur Entnahme der fertiggestellten Pflanzenkohle.

Eine im Wesentlichen rohrförmige Isolierung 17, die den Reaktor 2 thermisch gegen die Umgebung isoliert, umgibt den Mantel 12 des Reaktors 2 in einem oberen Abschnitt desselben. Die Wärmeisolierung 17 weist hier eine Höhe auf, die im Wesentlichen der halben Höhe des Reaktors 2 entspricht, und erstreckt sich ausgehend von der Ebene der oberen Abdeckung 13 nach unten über die obere Hälfte des Reaktors 2 hinweg. Die Wärmeisolierung 17 kann eine beliebige Höhe haben. Jedenfalls deckt sie vorzugsweise den Bereich des Reaktorinnenraums 16 ab, in dem die für die Pyrolyse erforderlichen hohen Temperaturen bis zu oder über 900°C herrschen, um einen Durchtritt der Wärme nach außen zu verhindern oder zumindest stark zu reduzieren. Die Wärmeisolierung 17 kann aus beliebigen geeigneten Materialien mit möglichst geringer Wärmeleitfähigkeit bestehen und kann bspw. Schaumstoffe, keramische Faserisolierungen und dgl. aufweisen.

Die obere Abdeckung 13 kann eine Abdeckplatte 18 und eine Abdeckklappe 19 aufweisen, die bedarfsweise umgeklappt werden kann, um Zugang zu dem Reaktorinnenraum 16 für Wartungszwecke oder dgl. zu bieten. Die Abdeckklappe 19 definiert einen Gasdom 21 in dem oberen Zuführbereich 161, zu dem während der Pyrolyse erzeugte Gase aufsteigen und in dem sie sich sammeln. Eine Ausleiteinrichtung 22 für Pyrolysegas, die hier lediglich durch einen kurzen Leitungsanschluss angedeutet ist, ist an dem Gasdom 21 angeschlossen und dazu eingerichtet, die in dem Gasdom 21 befindlichen Pyrolysegase aus dem Reaktorinnenraum 16 nach außen auszuleiten. Vorzugsweise ist die Ausleiteinrichtung 22 dazu eingerichtet, einen Unterdruck in dem Gasdom 21 zu erzeugen, der die Ausleitung von Gasen unterstützt. Bspw. kann die Ausleiteinrichtung 22 mit einem hier nicht dargestellten Sauggebläse oder dgl. verbunden sein.

Wie insbesondere aus den Figuren 1 und 2 ersichtlich, weist der Reaktor 2 eine Heizeinrichtung 23 auf, die an der oberen Abdeckung 13 befestigt ist und in dem Reaktorinnenraum 16 angeordnet ist, um diesen zu beheizen. Die Heizeinrichtung 23 weist mehrere Heizstäbe 24 auf, die mittels elektrischer Energie beheizt werden. Die Heizstäbe 24 sind an der oberen Abdeckung 13 mittels Montageeinrichtungen 26 befestigt und ragen durch hier nicht näher dargestellte Aufnahmeöffnungen hindurch und vertikal und freihängend in den Reaktorinnenraum 16 hinein, wobei sie in dem Reaktorinnenraum 16 im Wesentlichen parallel zueinander und zu einer hier nicht näher bezeichneten Seiteninnenwand des Reaktormantels 12 verlaufen. Die Montageeinrichtungen 26 dienen auch als Anschlüsse für Versorgungsleitungen, die die Heizstäbe 24 mit einer äußeren elektrischen Energiequelle verbinden (nicht veranschaulicht), um die Heizstäbe 24 zum Beheizen mit elektrische Energie zu speisen.

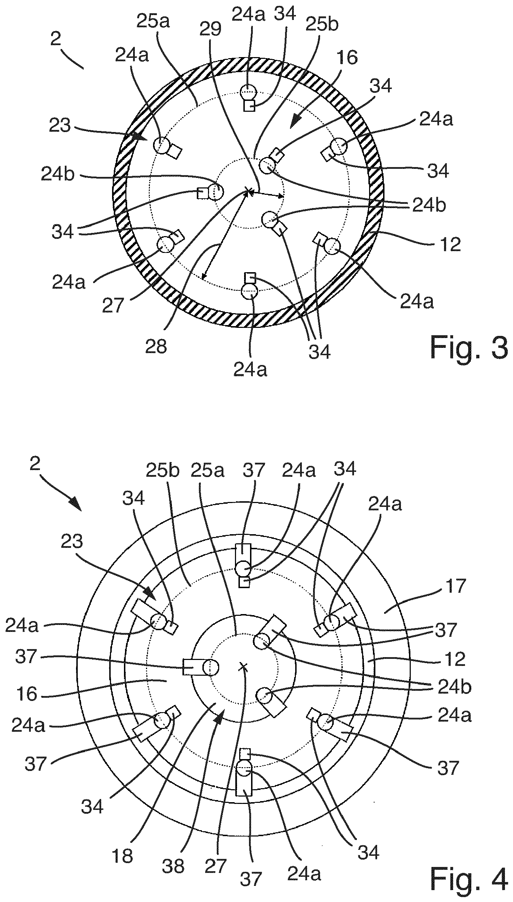

Wie insbesondere aus den Figuren 2, 3 und 4 ersichtlich, sind die Heizstäbe 24 über den Querschnitt des Reaktorinnenraums 16 verteilt angeordnet, um eine möglichst gleichmäßige Temperatur darüber zu ermöglichen. Insbesondere weist die Heizeinrichtung 23 hier mehrere äußere Heizstäbe 24a auf, die in der Nähe des Reaktormantels 12 um den Umfang des Reaktors 2 verteilt angeordnet sind und in Längsrichtung oder Höhenrichtung des Reaktors 2 vertikal verlaufen. Die Heizeinrichtung 23 weist ferner wenigstens einen, hier mehrere innere oder zentrale Heizstäbe 24b auf, die in oder nahe der Mitte oder dem Zentrum des Reaktors 2, jedenfalls näher an der Mitte oder dem Zentrum als die äußeren Heizstäbe 24a angeordnet sind und ebenfalls vertikal längs des Reaktors 2 verlaufen. Die Mitte oder das Zentrum des Reaktors 2 bezogen auf den Reaktormantel 12 ist in den Figuren 3 und 4 mit 27 angezeigt.

In dem dargestellten Beispiel weist die Heizeinrichtung 23 sechs äußere Heizstäbe 24a und drei innere Heizstäbe 24b auf, die jeweils in gleichmäßigem Umfangsabstand zueinander auf gedachten Kreislinien um die Mitte 27 des Reaktors 2 herum verteilt angeordnet sind. Somit sind zwei kreisförmige Ringanordnungen von Heizstäben 24a, 24b, ein äußerer Ring 25a mit einem ersten, größeren Radius 28 in Bezug auf die Mitte 27 und ein innerer oder zentraler Ring 25b mit einem zweien, kleineren Radius 29 in Bezug auf die Mitte 27 gebildet. Die Ringanordnungen müssen nicht kreisförmig, sondern können auch z.B. quadratisch, rechteckig, polygonal oder unregelmäßig ausgebildet und vorzugsweise passend zu der Form des Reaktors 2 sein. Die Heizeinrichtung 23 kann eine beliebige Anzahl von äußeren und inneren Heizstäben 24a, 24b je nach Größe des Reaktors 2 und den gewünschten Betriebsbedingungen aufweisen. Jedenfalls sind mehrere, wenigstens vier, vorzugsweise wenigstens sechs, mehr bevorzugt acht oder mehrere äußere Heizstäbe 24a und wenigstens ein innerer Heizstab 24b vorgesehen. Es wird bevorzugt, wenigstens zwei oder drei innere Heizstäbe 24b vorzusehen. In vorteilhaften Ausführungsformen, wie derjenigen nach Figur 2-4, kann die doppelte Anzahl an äußeren Heizstäben 24a im Vergleich zu den inneren Heizstäben 24b vorgesehen sein. Die inneren Heizstäbe 24b können auch in Bezug auf die äußeren Heizstäbe 24a in Umfangsrichtung versetzt angeordnet sein, wobei sie hier z.B. um den halben Winkelabstand der äußeren Stäbe 24a in Umfangsrichtung versetzt sein können. Dies kann eine äußerst günstige symmetrische Anordnung von Heizstäben 24 ergeben, die eine gute Kontrolle über die Temperaturbedingungen in dem Innenraum 16 des Reaktors 2 ermöglicht. Die Anzahl der äußeren Heizstäbe 24a muss aber nicht einem ganzzahligen Mehrfachen der Anzahl der inneren Heizstäbe entsprechen, und es müssen auch nicht alle inneren Heizstäbe 24b zu allen äußeren Heizstäben 24a in Umfangsrichtung versetzt angeordnet sein. Wenn lediglich ein einziger innerer Heizstab 24b verwendet wird, würde dieser vorteilhafterweise möglichst in dem Zentrum 27 des Reaktors 2 positioniert sein.

Erneut bezugnehmend auf Figur 2 ist veranschaulicht, dass jeder äußere Heizstab 24a und jeder innere Heizstab 24b in der dargestellten bevorzugten Ausführungsform drei Heizstabelemente 31, 32, 33 aufweist, die in Längs- bzw. Höhenrichtung des Reaktors 2 hintereinander oder in Serie angeordnet sind. Ein erstes Heizstabelement 31 jedes Heizstabs 24 ist an der oberen Abdeckung 13 befestigt und ragt in den Reaktorinnenraum 16 hinein. Ein zweites Heizstabelement 32 jedes Heizstabs 24 erstreckt sich im Anschluss an das erste Heizstabelement 31 unter diesem und im Wesentlichen fluchtend mit diesem. Ein drittes Heizstabelement 33 erstreckt sich im Anschluss an das zweite Heizstabelement 32 unter diesem und im Wesentlichen fluchtend mit diesem. Die Heizstabelemente 31, 32, 22 können aneinander befestigt sein, so dass für jeden Heizstab 24 eine durchgehende Heizstabelementanordnung 31-33 erhalten wird, die im Ganzen handhabbar ist. Die Heizstabelemente 31, 32, 33 sind jedoch über hier nicht näher dargestellte Stromleitungen individuell mit elektrischer Energie versorgbar, so dass sie einzeln in ihrer Heizleistung gesteuert oder geregelt werden können.

Während in den Figuren jeder Heizstab 24 drei Heizstabelemente 31-33 mit jeweils im Wesentlichen gleicher Länge aufweist, ist diese Gestaltung nicht zwingend erforderlich. Jeder Heizstab 24 könnte auch nur zwei Heizstabelemente aufweisen. Die Längen der Heizstabelemente 31, 32 und 33 könnten auch je nach gewünschtem Temperaturprofil unterschiedlich sein. Die Gesamtlänge der gebildeten Heizstäbe 24 kann je nach Anwendung und Bedarf mindestens ein Drittel, vorzugsweise in etwa oder mindestens die Hälfte der Höhe des Reaktors 2 betragen und in etwa der Länge des durch die Isolierung 17 wärmeisolierten Abschnitts des Reaktorinnenraums 16 betragen. Die dargestellte Gestaltung mit drei gleich langen Heizstabelementen 31-33 ist besonders vorteilhaft, weil sie bei vertretbarem Aufwand und einfachem Aufbau eine hohe Flexibilität bezüglich der Temperaturverteilung in dem Reaktorinnenraum 16 und gute Kontrolle darüber über die Länge des Reaktors 2 von dem Zuführbereich 161 bis zu dem Entnahmebereich 163 ermöglicht.

Wie ferner in den Figuren 2-4 veranschaulicht, weist die Vorrichtung 1 eine Vielzahl von Temperatursensoren 34 auf, die an zahlreichen Stellen in dem Reaktorinnenraum 16 verteilt angeordnet sind, um die Temperatur an diesen Stellen zu messen. Im vorliegenden Fall sind jedem Heizstab 24 mehrere Temperatursensoren 34 zugeordnet. Insbesondere ist vorteilhafterweise, jedoch nicht zwingend jedem Heizstabelement 31, 32, 33 jedes Heizstabs 24 wenigstens ein Temperatursensor 34 zugeordnet. Die Temperatursensoren 34 können an den Heizstabelementen 31-33 befestigt sein. In Ausführungsformen können die Temperatursensoren 34 in etwa in der Mitte jedes Heizstabelementes 31-33 angeordnet sein. Zusätzlich sind vorzugsweise auch Temperatursensoren 34 an den freien unteren Enden der Heizstäbe 24, insbesondere der untersten, dritten Heizstabelemente 33, als Fortsätze angeordnet, um die Temperatur der erzeugten Pflanzenkohle vor der Entnahme messen zu können.

Es könnten auch weniger oder mehr als die veranschaulichte Anzahl von Temperatursensoren 34 vorgesehen sein, um die Funktion zu erfüllen, die Temperaturen in dem Reaktorinnenraum 16 an in Querrichtung und in Längsrichtung des Reaktors 2 unterschiedlichen, verteilten Stellen hinreichend zu erfassen. Die Temperatursensoren 34 müssen nicht mit den Heizstabelementen 31-33 verbunden sein. Sie könnten auch gesondert von den Heizstäben 24 angeordnet und befestigt sein. Die dargestellte beispielhafte Ausgestaltung, bei der die Temperatursensoren 34 an den Heizstabelementen 31-33 angebracht sind, ermöglicht jedoch eine einfachere Handhabbarkeit und vermeidet Hindernisse für den Fluss der Biomasse in dem Innenraum 16.

Indem insbesondere auf die Figuren 2 und 4 Bezug genommen wird, ist ersichtlich, dass gemäß einem Aspekt die oberen Enden 37 der Heizstäbe 24, hier insbesondere der ersten Heizstabelemente 31, zur Seite gekrümmt bzw. nach außen umgebogen sind. Dadurch wird eine in der Abdeckplatte 18 definierte Zugangsöffnung 38, durch die Biomasse von der Zuführungsvorrichtung 3 dem Reaktorinnenraum 16 zugeführt wird, durch die Heizstäbe 24 weniger behindert, und die Zuführung der Biomasse ist erleichtert. In der dargestellten Ausführungsform weisen alle Heizstäbe 24 bzw. alle ersten Heizstabelemente 31 umgebogene Endabschnitte 37 auf, die durch die Montageeinrichtungen 26 ragen. Es können einheitliche erste Heizstabelemente 31 bzw. Heizstäbe 24 verwendet werden. In einer Modifikation könnten nur die inneren Heizstäbe 24b umgebogene äußere Enden 37 haben, um die Zugangsöffnung 38 freizugeben. Außerdem sind die umgebogenen Endabschnitte 37 der Heizstäbe 24 in den Figuren der Veranschaulichung wegen stark vergrößert dargestellt. Im Allgemeinen werden sie kaum über die Montageeinrichtungen 26 nach außen ragen.

An der oberen Abdeckung 13 ist die Zuführungsvorrichtung 3 zur Zuführung von Biomasse zu dem Reaktor 2 in den Zuführbereich 161 vorgesehen. In der dargestellten beispielhaften Ausführungsform kann die Zuführungsvorrichtung 3 bspw. eine Rohrleitung 39 mit einer in Figur 1 angedeuteten innenliegenden Befüllschnecke 41 aufweisen, die zum Transport der Biomasse aus einem hier nicht näher dargestellten Vorratsbehälter zu dem Reaktor 2 eingerichtet ist. Die Rohrleitung 39 mündet über einen vertikalen Rohrabschnitt 42 in die in der oberen Abdeckung 13 eingerichtete Zugangsöffnung 38. In Figur 2 sind die Rohre 39, 42 der Einfachheit und Übersichtlichkeit wegen weggelassen.

In dem Rohrabschnitt 42 ist eine Eintragsschleuse 43 angeordnet, die eingerichtet ist, um eine dosierte Menge an über die Rohrleitung 39 und den Rohrabschnitt 42 zugeführter Biomasse dem Innenraum 16 unter Luftabschluss zuzuführen. Die Eintragsschleuse 43 ist hier vorzugsweise pneumatisch betätigbar, könnte aber auch elektrisch oder hydraulisch gesteuert arbeiten.

In der dargestellten Ausführungsform weist die Eintragsschleuse einen ersten, oberen verstellbaren Schieber 44 und einen zweiten, unteren verstellbaren Schieber 46 auf, die in Höhenrichtung im Abstand zueinander angeordnet sind und zwischeneinander einen verschließbaren Schleusenraum 47 definieren. Die Schieber 44, 46 können unabhängig voneinander betätigt oder verstellt werden, um zu ermöglichen, dass sie abwechselnd, zeitlich versetzt zueinander öffnen, um den Lufteintrag durch die Eintragsschleuse 43 in den Reaktorinnenraum 16 zu verhindern oder zumindest auf ein Minimum zu reduzieren.

Es sind unterschiedliche Ausgestaltungen der Schieber 44, 46 möglich. Die Schieber 44, 46 können z.B. Schieberplatten sein, die schwenkbar oder verschiebbar angeordnet sind, um einen Durchgang zu öffnen oder zu sperren. Es könnten auch Klappen, Ventile oder sonstige Mittel verwendet werden, die verstellt, also geöffnet und geschlossen werden können, um den Durchgang zu öffnen und zu sperren. Zur Betätigung der Schieber 44, 46 sind ihnen einzeln Antriebsvorrichtungen 48, 49 zugeordnet, die dazu eingerichtet sind, die Schieber zu betätigen bzw. zu verstellen. Die Antriebsvorrichtungen 48, 49 sind hier vorzugsweise ansteuerbare Pneumatikzylinder, könnten aber auch z.B. durch Hydraulikzylinder oder Elektromotoren gebildet sein.

Die Vorrichtung 1 weist ferner die Entnahmevorrichtung 4 zur Entnahme der durch Umsetzung der Biomasse erzeugten Pflanzenkohle aus dem Entnahmebereich 163 des Reaktors 2 auf. Die Entnahmevorrichtung 4 ist unterhalb des Reaktors 2 angeordnet und an dem unteren Boden 14 des Reaktors 2 befestigt. Die Entnahmevorrichtung 4 ist ebenfalls gegen den Zutritt von Luft verschließbar ausgebildet und enthält hierzu eine Austragsschleuse 51 auf, mit der eine Rohrleitung 52 zum Abtransport der erzeugten Pflanzenkohle verbunden ist. Die Rohrleitung 52 kann eine Austragsschnecke 53 aufweisen, um die über die Austragsschleuse 51 ausgegebene Pflanzenkohle zu einem geeigneten, hier nicht näher dargestellten Sammelbehälter zu transportieren. Die Austragsschnecke 53 ist in Figur 1 lediglich schematisiert angedeutet. In Figur 2 ist die Rohrleitung 52 mit der Austragsschnecke 53 der Einfachheit und Übersichtlichkeit wegen weggelassen.

Die Austragsschleuse 51 kann im Wesentlichen identisch mit der Eintragsschleuse 43 ausgebildet und dazu eingerichtet sein, den Lufteintrag durch die Austragsschleuse 51 auf ein Minimum zu reduzieren. Die Austragsschleuse 51 kann hierzu einen ersten, oberen Schieber 54 und einen zweiten, unteren Schieber 56 aufweisen, die ähnlich den Schiebern 44, 46 vorzugsweise verschiebbar oder schwenkbar gelagert sind, um einen Durchgang zu öffnen oder zu sperren. Es können auch Klappen, Ventile oder sonstige Mittel, die bewegt werden können, um geöffnet und geschlossen zu werden, verwendet werden. Den Schiebern 54, 56 ist jeweils einzeln eine erste bzw. zweite Antriebsvorrichtung 58, 59 zugeordnet, die vorzugsweise durch ansteuerbare Pneumatikzylinder oder auch z.B. durch Hydraulikzylinder oder Elektromotoren gebildet sein können. Jedenfalls können die Schieber 54, 56 mittels der Antriebsvorrichtung 58, 59 in gesteuerter Weise abwechselnd betätigt und verstellt werden, so dass sie abwechselnd, zeitlich versetzt zueinander öffnen. Lediglich maximal einer von den Schiebern 54, 56 ist geöffnet, während der andere geschlossen ist. Dadurch kann der Luftzutritt zu dem Reaktorinnenraum 16 über die Entnahmevorrichtung 4 verhindert oder zumindest auf ein Minimum reduziert werden. Die obigen Ausführungen in Bezug auf die Eintragsschleuse 43 gelten in Bezug auf die Austragsschleuse 51 entsprechend.

Erneut bezugnehmend auf Figur 1 ist eine Steuereinrichtung 61 vorgesehen, die dazu eingerichtet ist, den Betrieb der Vorrichtung 1 zu steuern. Insbesondere ist die Steuereinrichtung 61 zur Steuerung der Betätigung der Zuführungsvorrichtung 3 und der Entnahmevorrichtung 4, einschließlich der Eintrags- und Austragsschleusen 43, 51, und zur Steuerung der Temperatur der Heizstäbe 24 eingerichtet. Hierzu ist die Steuereinrichtung 61 über Steuerleitungen 62 mit den Antriebsvorrichtungen 48, 49, 58, 59 der Schleusen 43, 51 verbunden, um das Öffnen und Schließen der Schieber 44, 46 bzw. 54, 56 zu koordinieren. Außerdem ist die Steuereinrichtung 61 über hier nicht näher dargestellte Steuerleitungen mit der hier nicht näher dargestellten elektrischen Energieversorgung für die Heizstäbe 24 verbunden, um die Zufuhr der elektrischen Energie zu den einzelnen Heizstäben 24 bzw. Heizstabelementen 31-33 jedes Heizstabs 24 zur Erreichung einer gewünschten Temperierung des Reaktorinnenraums 16 zu steuern.

Vorteilhafterweise kann die Steuereinrichtung 61 zur Regelung der den Heizstäben 24 zugeführten elektrischen Energie und somit zur Regelung der Beheizung der Heizstäbe 24 im geschlossenen Kreislauf basierend auf den von den Temperatursensoren 34 gemessenen Temperaturen eingerichtet sein. Hierzu ist die Steuereinrichtung 61 mit den Temperatursensoren 34 über in Figur 1 lediglich angedeutete Leitungen 63 verbunden, über die die Temperatursensoren 34 Messwerte der gemessenen Temperaturen an die Steuereinrichtung 61 übermitteln können. Die Temperatursensoren 34 können die Messwerte von sich aus in vorbestimmten Zeitintervallen an die Steuereinrichtung 61 übermitteln. Alternativ kann die Steuereinrichtung 61 auch über die Leitungen 63 die Übermittlung von Messwerten von den jeweiligen Temperatursensoren 34 anfordern, woraufhin diese dann die Daten an die Steuereinrichtung 61 übermitteln können. Die Leitungen 63 könnten einen gemeinsamen Datenbus umfassen, der eine Kommunikation zwischen den Temperatursensoren 34 und der Steuereinrichtung 61 ermöglicht. Die Temperatursensoren 34 könnten auch über eine drahtlose Kommunikationsverbindung mit der Steuereinrichtung 61 verbunden sein. Ebenfalls ist es denkbar, die Steuerleitungen 62 durch drahtlose Kommunikationsverbindungen zu ersetzen.

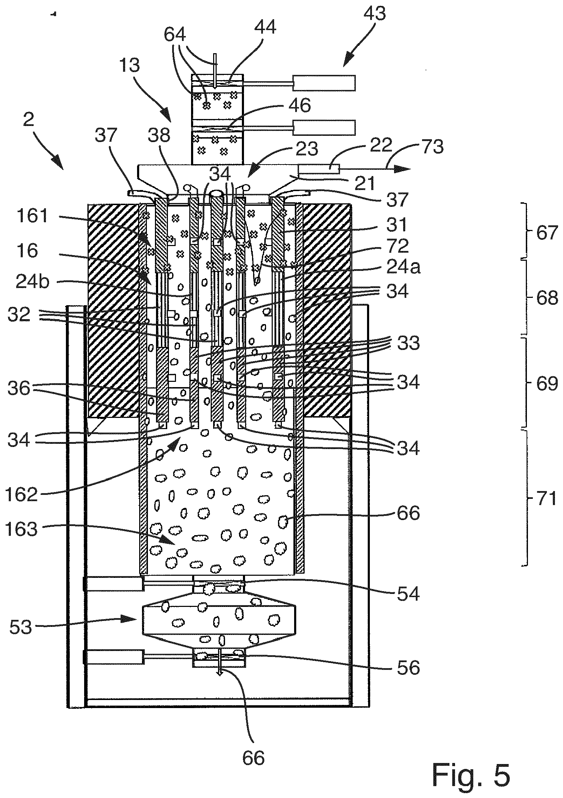

Die soweit beschriebene Vorrichtung 1 kann zur kontinuierlichen Herstellung von Pflanzenkohle durch Pyrolyse von Biomasse unter Sauerstoffabschluss verwendet werden. Die Funktionsweise der Vorrichtung 1 soll nun unter zusätzlicher Bezugnahme auf die Figur 5 erläutert werden, die einen vereinfachten Längsschnitt durch die Vorrichtung 1, ähnlich der Figur 2, unter Veranschaulichung des Materialflusses im Betrieb zeigt. Die Vorrichtung 1 funktioniert wie folgt:
Im Betrieb wird der Vorrichtung 1 über die Zuführungsvorrichtung 3 kontinuierlich Biomasse 64 zugeführt. Als Biomasse können beliebige pflanzliche Ausgangsstoffe, insbesondere Holz, Stroh und an Land wachsende Pflanzen verwendet werden. Es können auch Reststoffe aus Biogasanlagen, Sonnenblumen-, Oliven- und Rapsöl-Herstellung und andere Abfälle aus Gemüse oder Früchten verwendet werden. Es ist auch möglich, Klärschlamm, Mikroalgen, Wasserpflanzen sogar mit einem hohen Feuchtegehalt zu verwenden, weil die erfindungsgemäße Vorrichtung 1 durch die Regelung der Temperatur in unterschiedlichen Bereichen des Reaktors 2 in der Lage ist, unterschiedliche Arten von Biomasse 64 mit unterschiedlicher Temperatur und unterschiedlichem Feuchtegrad stets geeignet zu verarbeiten.

Die Biomasse 64 wird dem Reaktor 2 über die Eintragsschleuse 43 zugeführt. Die Steuereinrichtung 61 steuert die Antriebsvorrichtungen 48, 49 der Eintragsschleuse 43 derart an, dass stets nur maximal ein Schieber von den Schiebern 44, 46 geöffnet ist. Bspw. wird der erste, obere Schieber 44 gesteuert geöffnet, um den Schleusenraum 47 zu füllen, während der zweite, untere Schieber 46 geschlossen ist. Sobald der Schleusenraum 47 vollständig gefüllt ist, wird der obere Schieber 44 geschlossen, während der untere Schieber 46 geöffnet wird, um die definierte Menge an Biomasse 64 aus dem Schleusenraum 47 durch die Zugangsöffnung 38 in der oberen Abdeckung 13 dem Zuführbereich 161 des Reaktorinnenraums 16 zuzuführen. Sobald die Biomasse 64 den Schleusenraum 47 verlassen hat und in den Reaktorinnenraum 16 eingetreten ist, wird der untere Schieber 46 geschlossen, um die Zuführungsvorrichtung 3 vollständig luftdicht zu verschließen. Während des gesamten Zuführvorgangs ist keine Durchgangsverbindung von außen zu dem Reaktorinnenraum 16 zugelassen. Der Zutritt von Luftsauerstoff wird somit verhindert oder zumindest minimiert. Sollte Luft in den Schleusenraum 47 und anschließend in den Gasdom 21 unmittelbar unter der Abdeckplatte 18 eintreten, wird diese gemeinsam mit dem Pyrolysegas, das bei der Umsetzung der Biomasse in dem Reaktor 2 entsteht, über die Ausleiteinrichtung 22 nach außen abgesaugt. Auf diese Weise kann Luftsauerstoff nicht oder kaum in den Prozessraum innerhalb des Reaktorinnenraums 16 eintreten.

Es ist auch möglich, in den Schleusenraum 47 ein inertes Gas, wie z.B. Kohlendioxid oder Stickstoff, einzublasen, um die Gefahr eines Zutritts von Luftsauerstoff zu dem Reaktorinnenraum 16 und einer Verbrennung noch weiter zu reduzieren.

Sobald die Biomasse 64 in den Reaktorinnenraum 16 eingetreten ist, wird sie darin in einem kontinuierlichen Prozess zunehmend pyrolytisch verkohlt und zu Pflanzenkohle umgesetzt. Die erzeugte Pflanzenkohle 66 wird dann über die Austragsschleuse 51 und die Austragsschnecke 53 in der Rohrleitung 52 abgeführt. Vorteilhafterweise werden die Schieber 54, 56 in gleicher Weise wie die Schieber 44, 46 der Eintragsschleuse 43 abwechselnd, zeitlich versetzt durch die Steuereinrichtung 61 gesteuert geöffnet und geschlossen, so dass zu keinem Zeitpunkt beide Schieber 44, 46 geöffnet sind und ein offener Durchgang durch die Entnahmevorrichtung 4 zugelassen ist, der einen Luftzutritt zu dem Reaktorinnenraum 16 zulassen würde.

In den Schleusenraum 57 der Austragsschleuse 51 kann bedarfsweise ebenfalls ein inertes Gas, wie bspw. Kohlendioxid oder Stickstoff, eingespeist werden, um die Gefahr eines Luftzutritts zu dem Reaktorinnenraum 16 und einer Verbrennung der Pflanzenkohle 66 darin noch weiter zu reduzieren.

Die Menge der abgeführten erzeugten Pflanzenkohle 66 pro Betätigungszyklus ist definiert und durch das Volumen des Schleusenraums 57 der Austragsschleuse 51 vorgegeben. Die Volumina der Schleusenräume 47, 57 beider Schleusen 43, 51 können im Wesentlichen gleich sein. Die Austragsschleuse 51 wird, wie die Eintragsschleuse 43, in bestimmten Arbeitszyklen oder Zeitintervallen, in einer durch die Steuereinrichtung 61 gesteuerten Weise in Abhängigkeit von den jeweiligen Betriebs- und Umgebungsbedingungen, der verwendeten speziellen Biomasse und den durch die Temperatursensoren 34 gemessenen Temperaturen geöffnet und geschlossen.

Auf dem gesamten Weg von der Eintragsschleuse 43, durch den Reaktorinnenraum 16 hindurch bis zu der Austragsschleuse 51 und aus dieser heraus wandert die Biomasse 64 bzw. die zunehmend umgesetzte Pflanzenkohle 66 allein aufgrund ihrer Schwerkraft nach unten. Es sind keinerlei Transportvorrichtungen oder bewegte Teile erforderlich, um die Biomasse 64 während des Pyrolyseprozesses zu transportieren. Die Geschwindigkeit der wandernden Biomasse 64 innerhalb des Reaktors 2 wird durch die Steuereinrichtung 61 durch die gesteuerte Betätigung der Eintrags- und Austragsschleusen 43, 51 gesteuert.

Innerhalb des Reaktorinnenraums 16 durchläuft das Wanderbett aus Biomasse 64 verschiedene Zonen oder Bereiche, die verschiedene Temperaturen haben, wie sie durch die Steuereinrichtung 61 vorgegeben werden, um die Biomasse 64 geeignet zu behandeln. Die Steuereinrichtung 61 steuert die Heizleistung der Heizstäbe 24, insbesondere der Heizstabelemente 31, 32, 33, in einer derartigen Weise, dass in Tiefenrichtung zunächst nach unten eine zunehmend höhere Temperatur des Reaktorinnenraums 16 und in der Nähe des Entnahmebereichs 166 eine niedrigere Abkühltemperatur eingestellt wird. Nachdem die Pyrolyse eine exotherme Reaktion ist, beeinflusst auch die bei der pyrolytischen Umsetzung der Biomasse 64 freigesetzte Wärme die Temperatur in den unterschiedlichen Bereichen der Reaktorinnenraums 16. Die Steuereinrichtung 61 kann dies berücksichtigen, indem sie die Heizleistung jedes einzelnen Heizstabelementes 31, 32 und 33 jedes Heizstabs 24a, 24b durch Einstellung der jeweils zugeführten elektrischen Energie in Abhängigkeit von den durch die jeweiligen Temperatursensoren 34 gemessenen Temperaturen regelt.

Insbesondere kann die Steuereinrichtung 61 die Beheizung der ersten Heizstabelemente 31 derart regeln, dass in einer ersten Zone oder einem ersten Bereich 67 auf der Höhe der ersten Heizstabelemente 31 eine quer durch den Reaktorinnenraum 16 im Wesentlichen gleichmäßige Temperatur von etwa 100-200°C, insbesondere im Mittel etwa 150°C eingestellt wird, die es ermöglicht, die zugeführte Biomasse 64 zu trocknen und zu entfeuchten. Das Trocknen und Entfeuchten der zugeführten Biomasse 64 wird auch durch die aufsteigenden Gase gefördert, die von unten durch den Innenraum 16 bis zu dem Gasdom 21 aufsteigen.

Die zweiten Heizstabelemente 32 und die dritten Heizstabelemente 33 werden vorzugsweise elektrisch auf eine deutlich höhere Temperatur geregelt, um die für die Pyrolyse benötigten hohen Temperaturen zu erreichen. Bspw. können die zweiten Heizstabelemente 32 auf eine Temperatur von bis zu 500°C oder sogar 600°C und die dritten Heizstabelemente 333 auf bis zu 900°C oder sogar 1000°C erhitzt werden. In Kombination mit der Temperatur der ersten Heizstabelemente 31 wird so ein Temperaturgradient erzeugt, der eine zweite Temperaturzone oder einen zweiten Bereich 68 mit einer Temperatur von ca. 200-600°C, insbesondere im Mittel etwa 300-500°C, auf Höhe der zweiten Heizstabelemente 32 definiert. Darunter liegt eine dritte Zone bzw. ein dritter Bereich 69 auf Höhe der dritten Heizstabelemente 33 vor, der eine Temperatur von ca. 500-900°C, insbesondere im Mittel etwa 700-800°C aufweisen kann.

Im Bereich unterhalb der dritten Heizstabelemente 33wird eine vierte Zone oder ein vierter Bereich 71 mit einer zur Abkühlung für die Entnahme geeigneten Temperatur erzeugt. Die Temperatur in dieser Abkühlzone 71, insbesondere in der Nähe der Austragsschleuse 51, kann in etwa 100-200°C, insbesondere im Mittel etwa 150°C, betragen.

Auf diese Weise wird die zugeführte Biomasse beim Durchgang durch den Reaktorinnenraum 16 kontinuierlich und schrittweise oder stetig langsam, gleichmäßig, zunehmend erwärmt und durcherhitzt, ohne lokal überhitzt zu werden. Nachdem die Biomasse 64 in der ersten Zone 67 schonend getrocknet und entfeuchtet worden ist, wird sie in der mittleren, zweiten Zone 68 entgast und zunehmend pyrolytisch umgewandelt. In der unteren, dritten Zone 69 wird bei der höchsten Temperatur die vollständige Verkohlung der Biomasse 64 zu Pflanzenkohle 66 abgeschlossen. In der Abkühlzone 71 wird die Pflanzenkohle 66 dann auf eine zur Entnahme geeignete Temperatur abgekühlt.

Die Herstellung der Pflanzenkohle erfolgt in einem kontinuierlichen Prozess, bei dem pro Zyklus oder Zeitintervall fortdauernd eine definierte Menge an Pflanzenkohle 66 entnommen und eine entsprechende definierte Menge an Biomasse 64 in den Reaktor 2 nachgefüllt wird. Dies im Unterschied zu diskontinuierlichen Prozessen, bei denen der gesamte Reaktor gefüllt und erst wieder entleert wird, nachdem die gesamte Biomasse zu Pflanzenkohle umgesetzt worden ist. Der kontinuierliche Prozess ist effizienter und wirtschaftlicher. Er wird durch die Steuereinrichtung 61 überwacht und koordiniert. Insbesondere ist die Steuereinrichtung 61 eingerichtet, um die Verweildauer der behandelten Biomasse 64 in dem Reaktorinnenraum 16 in Kombination mit der Regelung der Heiztemperatur der Heizstäbe 24 in Abhängigkeit von den in dem Reaktorinnenraum 16 verteilt gemessenen Temperaturen, wie sie durch die Vielzahl von Temperatursensoren 34 erfasst werden, durch eine gezielt angepasste Betätigung der Eintragsschleuse 43 und der Austragsschleuse 51 vorzugsweise vollkommen automatisiert zu steuern. Die Steuereinrichtung 61 kann zur Steuerung der Verweildauer der Biomasse 64 in dem Reaktorinnenraum 16 auch den gemessenen Unterdruck in dem Gasdom 21, die Temperatur des Pyrolysegases bei der Ableitung durch die Ausleiteinrichtung 22 der bei der anschließenden Verbrennung oder andere messbare Parameter heranziehen, die indirekt Aufschluss über die Prozessbedingungen, den Fortgang und den Grad der Behandlung der Biomasse 64 oder die Qualität der Pflanzenkohle geben können.

Wenn die Steuereinrichtung 61 bspw. anhand der Temperatursensormesswerte einen plötzlichen Abfall der Temperatur in der ersten, obersten Zone 67 feststellt, kann dies darauf hindeuten, dass die nachgefüllte Biomasse 64 kälter oder feuchter als die früher zugeführte Biomasse ist. Daraufhin kann die Steuereinrichtung 61 vorzugsweise automatisiert die Zufuhr der elektrischen Energie wenigstens zu den ersten Heizstabelementen 31 der Heizstäbe 24 erhöhen, um der größeren Kälte bzw. Feuchtigkeit der nachgefüllten Biomasse 64 durch Erhöhung der Temperatur in der ersten Zone 67 Rechnung zu tragen, damit die Biomasse 64 stärker getrocknet bzw. entfeuchtet wird. Die Steuereinrichtung 61 kann auch die Zyklus- bzw. Intervallzeit der Betätigung der Eintrags- und Austragsschleusen 43, 51 verlängern, damit die kältere oder feuchtere Biomasse 64 länger in dem Reaktorinnenraum 16 behandelt wird. Dies stellt sicher, dass die erzeugten Endprodukte an Pflanzenkohle 66 eine gleichmäßige gute Qualität unabhängig davon haben, welche Art an Biomasse mit welchem Feuchtegrad und welcher Temperatur auch immer zugeführt wird.

Die Steuereinrichtung 61 berücksichtigt die Messwerte der Temperatursensoren 34 in den verschiedenen Zonen 67, 68, 69 und 71, um gemäß einer vorgegebenen Steuerungslogik eine optimale pyrolytische Umsetzung der Biomasse zu erzielen. Jede lokale Abweichung der Temperatur von Sollwerten kann durch die Steuereinrichtung 61 erkannt und durch Nachregelung der Heizleistung jedes einzelnen Heizstabelementes 31, 32 bzw. 33 jedes einzelnen Heizstabes 24 nachgeregelt werden. Auch die Messwerte der Temperatursensoren 34, die als Fortsätze an den unteren Enden 36 der Heizstäbe 24 in der Abkühlzone 71 angeordnet sind, gelten als wichtige Indikatoren dafür, ob die entstandene Pflanzenkohle 66 hinreichend behandelt worden ist. Ist die gemessene Temperatur in der Abkühlzone 71 zu gering, kann dies darauf hinweisen, dass die Biomasse 64 beim Durchgang durch den Reaktorinnenraum 16 unzureichend verkohlt worden ist, woraufhin die Steuereinrichtung 61 durch Anpassung der Zykluszeit und/oder der Temperaturen der Heizstäbe 24 bzw. Heizstabelemente 31-33 reagieren kann.

Durch das Vorsehen der inneren Heizstäbe 24b in Kombination mit den äußeren Heizstäben 24a kann eine gleichmäßige Temperatur in Querrichtung durch den Reaktorinnenraum 16 in jeder Zone 67-69 sichergestellt werden. Außerdem kann die Gefahr einer Trichterbildung, wie sie in vertikal aufgestellten Wanderbettreaktoren herkömmlicher Bauarten durch schnelles Durchfallen der Biomasse gelegentlich auftreten kann, reduziert werden, oder es kann einer stattfindenden Trichterbildung schnell entgegengewirkt werden. Kommt es aufgrund der Beschaffenheit der Biomasse 64 zu einer lokalen Trichterbildung, wie sie bspw. mit 72 in Figur 5 angezeigt ist, kann die Steuereinrichtung 61 dies anhand der empfangenen Temperaturmesswerte feststellen und den betroffenen Bereich oder Sektor zwischen den entsprechenden äußeren und inneren Heizstäben 24a, 24b identifizieren. Die Steuereinrichtung 61 kann dann die zugehörigen Heizstabelemente 31-33 der betreffenden Heizstäbe 24a, 24b in dem identifizierten Bereich in ihrer Heizleistung nachregeln, um die Behandlung der Biomasse 64 in diesem Bereich zu intensivieren. Die Steuereinrichtung 61 kann gegebenenfalls auch zusätzlich die Verweildauer der Biomasse 64 durch Erhöhung der Zykluszeit verlängern.

Das bei der Herstellung der Pflanzenkohle 66 entstehende Pyrolysegas 73 steigt in dem Reaktorinnenraum 16 nach oben und wird durch die nachgeführte Biomasse 64 gefiltert und zunehmend abgekühlt. Gegebenenfalls entstehende Asche wird ebenfalls durch die nachgefüllte Biomasse 64 herausgefiltert, die als eine Art Biofilter wirkt. Die Pyrolysegase 73, die den Gasdom 21 erreichen, sind im Wesentlichen frei von Asche und werden über die Ausleiteinrichtung 22 nach außen abgeführt. Durch den in dem Gasdom 21 erzeugten Unterdruck wird auch eine eventuell in den Gasdom 21 einströmende Luft unmittelbar nach außen abgesaugt. Die Pyrolysegase 73 können im Wesentlichen frei verbrannt oder vorzugsweise auch zur Erzeugung von Energie, z.B. in einer Gasturbine oder einem Blockheizkraftwerk, verwendet werden. Die elektrische Energie kann zur Beheizung der Heizstäbe 24 genutzt, gespeichert oder in ein Netz eingespeist werden. Dies kann die Energiebilanz der Vorrichtung 1 weiter erhöhen.

Mit der Vorrichtung 1 kann Pflanzenkohle mit hoher Qualität, mit einem hohen Verkohlungsgrad, hohem Kohlenstoffgehalt von wenigstens 90 Gew.-%, vorzugsweise über 95 Gew.-%, geringem Anteil an polyzyklischen aromatischen Kohlenwasserstoffen (PAK) von weniger als 4 mg/kg, vorzugsweise weniger als 2 mg/kg, geringem Ascheanteil, einem hohen Grad an Porosität, einer großen spezifischen Oberfläche und großer Stabilität gewonnen werden. Durch die stetige, schonende Behandlung wird ein Aufplatzen der Biomasse 64 oder Pflanzenkohle 66, das ein Zerfallen zu Staub und damit verbundene Verbrennungen oder Explosionen zur Folge haben könnte, verhindert. Die entstehende Pflanzenkohle 66 eignet sich bestens zur Verwendung in der Landwirtschaft als Bodenverbesserer, als Trägerstoff für Düngemittel und Habitat für Mikroorganismen, als Hilfsstoff für die Kompostierung und Nährstofffixierung von Gülle, als Futtermittelzusatz und Nahrungsergänzungsmittel sowie auch als Produkt für andere Industriezweige. Wird die Pflanzenkohle in landwirtschaftliche Böden eingearbeitet, kann sie langfristig, für über 1000 Jahre stabil den Kohlenstoff binden und das ursprünglich von Pflanzen assimilierte Kohlendioxid langfristig der Atmosphäre entziehen. Dadurch kann die Pflanzenkohle einen Beitrag zur Reduktion der Klimaerwärmung leisten.

Im Rahmen der Erfindung sind zahlreiche Modifikationen möglich. Bspw. kann der Reaktor 2 eine beliebige Gestalt, z.B. prismatische, insbesondere quaderförmige, aufweisen. Die äußeren Heizstäbe 24a und die inneren Heizstäbe 24b können dann bspw., jedoch nicht notwendigerweise in entsprechenden quadratischen, rechteckigen oder sonstigen polygonalen Ringanordnungen 25a, 25b positioniert werden, die der Form des Reaktors entsprechen können. Es kann eine beliebige Anzahl von äußeren und inneren Heizstäben 24a, 24b und auch eine unterschiedliche Anzahl von Heizstabelementen 31, 33 pro Heizstab 24, z.B. mehr als drei Heizstabelemente pro Heizstab 24, verwendet werden. Es ist möglich, drei oder mehrere konzentrische Ringanordnungen von Heizstäben 24 vorzusehen, um den Reaktorinnenraum 16 gleichmäßig in Querrichtung und mit dem gewünschten Temperaturprofil in Längsrichtung zu beheizen. Die Länge der Heizstabelemente 31-33 bzw. Heizstäbe 24 kann in unterschiedlichen Bereichen des Reaktorinnenraums 16 auch unterschiedlich sein. Eine Wärmeisolierung 17 könnte auch im Bereich der Abkühlzone 71 vorgesehen sein, um auch dort einen Wärmeaustritt zu verhindern. Anstelle der Eintragsschleuse 43 und der Austragsschleuse 51 könnten auch einfache Verschlussplatten, -klappen oder dgl. vorgesehen sein, wobei jedoch die Schleusen 43, 51 eine nahezu absolute Dichtheit und Vermeidung eines Luftsauerstoffeintrags ermöglichen. Dies ist für den Pyrolyseprozess und das Endprodukt der Pflanzenkohle äußerst wichtig. Die Zuführung der Biomasse 64 und die Abführung der Pflanzenkohle 66 könnten auch durch den Reaktormantel 12 anstatt durch die obere Abdeckung 13 und den unteren Boden 14 erfolgen. Es können auch mehrere derartige Vorrichtungen 1 mit zwei oder mehreren Reaktoren 2 zu einer größeren Biokohlenerzeugungsanlage miteinander kombiniert werden.

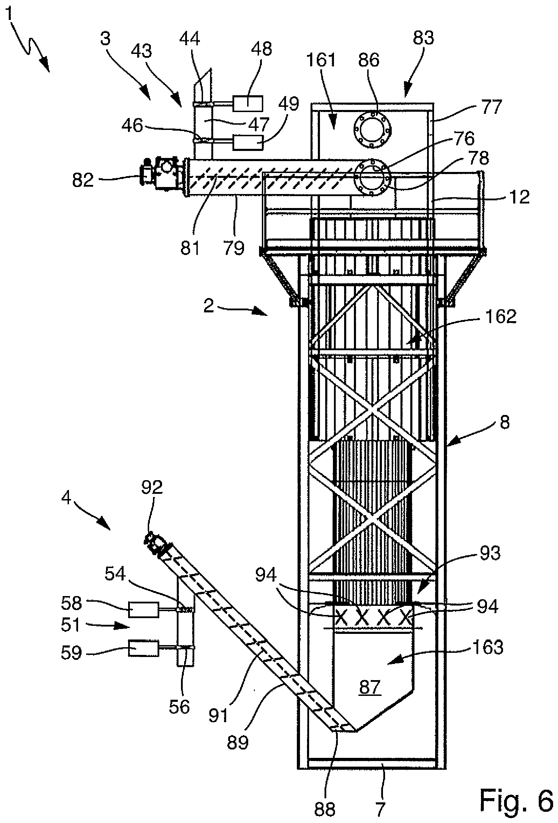

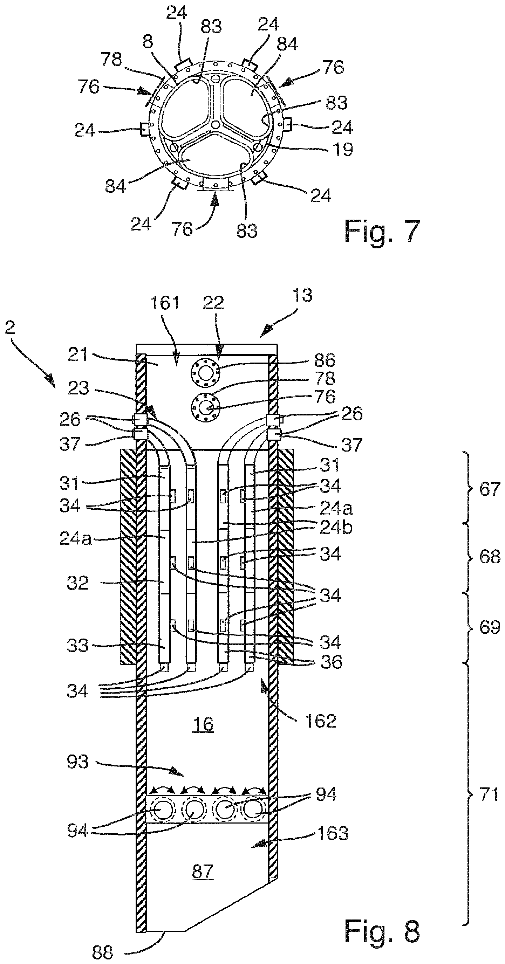

Figuren 6-8 zeigen vorteilhafte Weiterbildungen einer erfindungsgemäßen Vorrichtung 1 zur Herstellung von Pflanzenkohle durch Pyrolyse von Biomasse gemäß einer weiteren, besonders bevorzugten Ausführungsform. Figur 6 zeigt eine vereinfachte Seitenansicht der Vorrichtung 1, während Figur 7 eine Draufsicht auf diese und Figur 8 eine vereinfachte, ausschnittsweise Längsschnittdarstellung durch die Vorrichtung 1 zeigen. Insoweit die Vorrichtung 1 gemäß den Figuren 6-8 mit der vorstehend beschriebenen Vorrichtung 1 gemäß den Figuren 1-5 hinsichtlich des Aufbaus und/oder der Funktionsweise identisch oder im Wesentlichen gleich ist, wird zur Vermeidung von Wiederholungen unter Zugrundelegung der gleichen Bezugszeichen auf die vorstehende Beschreibung verwiesen. Sofern nachstehend keine Unterschiede bezüglich des Aufbaus und/oder der Funktionsweise erwähnt sind, gelten die vorstehenden Ausführungen im Zusammenhang mit der Ausführungsform gemäß den Figuren 1-5 in gleicher Weise für die Ausführungsform gemäß den Figuren 6-8.

Die besonders bevorzugte Ausführungsform der erfindungsgemäßen Vorrichtung 1 gemäß den Figuren 6-8 unterscheidet sich von derjenigen gemäß den Figuren 1-5 insbesondere durch die Art der Zuführung der Biomasse 64 zu dem Reaktor 2 und der Entnahme der fertiggestellten Pflanzenkohle 66 aus diesem. Genauer gesagt, erfolgt die Zuführung der Biomasse nicht über eine Zugangsöffnung 38 in der oberen Abdeckplatte des Reaktors 2, sondern von der Seite des Reaktors 2 aus. Hierzu weist der Reaktor 2 in seinem oberen Kopfendbereich wenigstens eine Zugangsöffnung 76 auf, die in einer Seitenwand 77 in dem Zuführbereich 161 des Reaktors 2 ausgebildet ist und durch die die zu behandelnde Biomasse 64 zugeführt werden kann. Vorzugsweise sind, wie insbesondere aus Figur 7 hervorgeht, mehrere, z.B. drei oder vier Zugangsöffnungen 76 um den Umfang der Reaktorwand 77 herum gleichmäßig verteilt angeordnet, um die Biomasse in der Querebene im Wesentlichen gleichmäßig von allen Richtungen in den Reaktorinnenraum 16 einzubringen.

Jede Zugangsöffnung 76 ist mit einem Flansch 78 versehen, mit dem ein Eintragsrohr 79 mit einer darin angeordneten Eintragsschnecke 81 verbunden ist. Die Eintragsschnecke 81 ist durch einen Motor 82 antreibbar, um zugeführtes Biomaterial zu der Zugangsöffnung 76 zu befördern. Die Eintragsschnecke 81 kann gleich oder ähnlich der Befüllschnecke 41 ausgebildet sein.

An dem von dem Reaktor 2 beabstandeten Ende des Eintragsrohrs 79 ist eine Eintragsschleuse 43 angeordnet, um eine dosierte Menge an über eine hier nicht näher dargestellte Fördervorrichtung zugeführter Biomasse in das Eintragsrohr 79 unter Luftabschluss einzubringen. Die Biomasse wird anschließend mittels der Eintragsschnecke 81 durch das Eintragsrohr 79 dem Innenraum 16 zugeführt. Die Eintragsschleuse 43 kann mit der Eintragsschleuse 43 der Vorrichtung 1 gemäß der Ausführungsformen nach Figuren 1-5 gleich ausgebildet sein und funktionieren, so dass die diesbezüglichen vorstehenden Ausführungen hier in gleicher Weise gelten. Es genügt zu erwähnen, dass die Eintragsschleuse 43 vorzugsweise pneumatisch oder elektrisch oder hydraulisch betätigbare Schieber 44, 46 aufweist, die einen Schleusenraum 47 begrenzen und denen Antriebsvorrichtungen 48, 49 zugeordnet sind, um die Schieber 44, 46 in gesteuerter Weise abwechselnd zu betätigen bzw. zu verstellen, so dass sie abwechselnd, zeitlich versetzt zueinander öffnen. Dadurch kann beim Zuführen der Biomasse ein Luftzutritt zu dem Reaktorinnenraum 16 über die Zuführvorrichtung 3 vermieden oder zumindest auf ein Minimum reduziert werden.

Es sollte erwähnt werden, dass weitere Fördermittel, die dazu vorgesehen sind, das Biomaterial aus einem Vorratsbehälter zu der Eintragsschleuse 43 zu transportieren, in der Figur 6 der Einfachheit und Übersichtlichkeit wegen weggelassen sind. In den Figuren 7 und 8 sind auch die Eintragsrohre 79, die Eintragsschnecken 81 und die Motoren 82 der Anschaulichkeit wegen weggelassen.

Wie ferner aus Figur 7 hervorgeht, können an der oberen Abdeckung 13 des Zuführbereiches 161 des Reaktors 2 vorzugsweise mehrere, hier drei, Revisionsöffnungen 83 vorgesehen sein, die bei Bedarf Zugang zu dem Reaktorinnenraum 16 für Inspektions-, Wartungs- oder Umrüstungszwecke ermöglichen. Die Revisionsöffnungen 83 können durch geeignete Verschlussmittel, z.B. schwenkbare Verschlussklappen 84, verschließbar sein, die zum Freilegen der Revisionsöffnungen 83 in die Offenstellung bspw. verschwenkt werden können. Es wird erkannt, dass hier unterschiedliche Anzahl und Ausbildung der Revisionsöffnungen und zugehöriger Verschlussmittel möglich sind. Nachdem die Zuführungsvorrichtung 3 zur Seite des Reaktors 2 hin verlagert ist, ist vorteilhafterweise Platz für einen Zugang zu dem Reaktorinnenraum 16 an dem oberen Stirnende des Reaktors 2 geschaffen.

Indem insbesondere auf die Figuren 6 und 8 Bezug genommen wird, ist ersichtlich, dass im Unterschied zu der Ausführungsform gemäß den Figuren 1-5 hier die Ausleiteinrichtung 22 für das entstehende Pyrolysegas oberhalb der Zugangsöffnung bzw. Zugangsöffnungen 76 für die Biomasse angeordnet ist. Insbesondere ist ein Gasleitungsflansch 86 zur Befestigung einer Gasleitung zur Ableitung des Pyrolysegases 73 am oberen Ende des Zuführbereiches 161 des Reaktors 2 oberhalb der Zugangsöffnung 76 für Biomasse in der Seitenwand 77 angeordnet. Es kann die gleiche Anzahl an Gasleitungsflanschen 86 wie Flansche 78 mit Zugangsöffnungen 76 vorgesehen sein. Durch die höhere Anordnung der Flansche 78, 86 passiert die zugeführte Biomasse auf ihrem Wanderweg nach unten nicht den Bereich der Gasleitungsflansche 86, so dass ein durch die Gasableitung erzeugter Unterdruck die zugeführte Biomasse vorteilhafterweise nicht beeinflusst, nicht ablenkt und nicht verwirbelt.

Die Entnahmevorrichtung 4 der Vorrichtung 1 gemäß den Figuren 6-8 unterscheidet sich ebenfalls von der Entnahmevorrichtung 4 der Ausführungsform gemäß den Figuren 1-5. Wie insbesondere aus Figur 6 ersichtlich, weist der Reaktor 2 an seinem unteren Ende in dem Entnahmebereich 163 einen Sammelraum 87 auf, der sich zu dem unteren Ende 88 hin zunehmend verjüngt, um der erzeugten Pflanzenkohle 66 zu ermöglichen, zu dem verengten unteren Ende 88 des Entnahmebereichs 163 zu wandern. Mit dem unteren Ende 88 des Entnahmebereichs 163 ist ein Austragsrohr 89 verbunden, in dem eine Austragsschnecke 91 angeordnet ist, die eingerichtet ist, um die Pflanzenkohle 66 aus dem Entnahmebereich 163 durch das Austragsrohr 89 nach au-ßen zu befördern. Die Austragsschnecke 91 ist durch einen Motor 92 angetrieben. Der Motor 92 der Austragsschnecke 91 und der Motor 82 der Eintragsschnecke 81 werden durch die Steuereinrichtung 61 geeignet angesteuert, um den Entnahmeprozess und den Zuführprozess unter Luftabschluss zu bewerkstelligen. Die Steuereinrichtung 61 ist mit der Steuereinrichtung 61 der Ausführungsform gemäß den Figuren 1-5 im Wesentlichen gleich und hier der Übersichtlichkeit wegen weggelassen.

An dem von dem Reaktor 2 entfernten Ende des Austragsrohrs 89 ist eine Austragsschleuse 51 vorgesehen, die mit der Austragsschleuse 51 der Ausführungsform gemäß den Figuren 1-5 im Wesentlichen gleich ist und funktioniert. Um Wiederholungen zu vermeiden, wird auf die diesbezügliche vorstehende Beschreibung verwiesen. Es genügt zu erwähnen, dass die Austragsschleuse die Schieber 54, 56 aufweist, die dazwischen den Schleusenraum 57 definieren und jeweils durch eine vorzugsweise pneumatische, gegebenenfalls elektrische oder hydraulische Antriebsvorrichtung 58, 59 in gesteuerter Weise abwechselnd betätigt, insbesondere verschoben oder verschwenkt werden, so dass sie abwechselnd, zeitlich versetzt zueinander öffnen. Dadurch kann der Lufteintrag durch die Austragsschleuse 51 vermieden oder zumindest auf ein Minimum reduziert werden.

Wie ferner aus den Figuren 6 und 8 ersichtlich, ist hier an dem Übergang zwischen dem Prozessraum 162 und dem Entnahmebereich 163, oder zumindest in der Nähe des letzteren, eine steuerbare Verteilvorrichtung 93 zur Verteilung der Pflanzenkohle 66 in Querrichtung des Reaktors 2, also über die Breite des Reaktorinnenraums 16, vorgesehen. Die Verteilvorrichtung 93 weist hier eine geeignet Anzahl von z.B. vier in Figur 6 lediglich angedeuteten, individuell ansteuerbaren und motorisch bewegbaren Verteilermittel 94 auf, die es ermöglichen, die Pflanzenkohle wahlweise zu einer Seitenwand des Entnahmebereichs 163 oder zu der Mitte des Entnahmebereichs hin abzulenken. Die Verteilermittel 94 können insbesondere durch Verteilerschnecken gebildet sein, die jeweils individuell durch einen hier nicht näher dargestellten Motor wahlweise in eine beliebige Drehrichtung gedreht werden können. Somit kann die Pflanzenkohle bedarfsweise nach vorne oder hinten (in Figur 6 in die Blattebene hinein oder aus dieser heraus) und wahlweise nach links oder nach rechts verteilt werden.

Es versteht sich, dass die Antriebsmittel für die Verteilerschnecken 94 ebenfalls mit der Steuereinrichtung 61 kommunikationsmäßig verbunden sind, die die Drehung der Verteilerschnecken 94 nach Bedarf steuert, um den Durchlass der Pflanzenkohle zu dem darunter liegenden Abschnitt des Entnahmebereichs 163 und die Verteilung der Pflanzenkohle in Querrichtung zu beeinflussen.

Als weiterer Unterschied zu der Ausführungsform gemäß den Figuren 1-5 ist bei der Vorrichtung 1 gemäß den Figuren 6-8 die Heizeinrichtung 23 nicht an der oberen Abdeckung, sondern an der Seitenwand 77 des Zuführbereichs 161 des Reaktors 2 befestigt. Die Heizeinrichtung 23 weist hier wiederum mehrere Heizstäbe 24 auf, die mittels elektrischer Energie beheizt werden, wobei zu den Heizstäben 24 mehrere äußere Heizstäbe 24a, die in der Nähe des Reaktormantels 12 um den Umfang des Reaktors verteilt vertikal angeordnet sind, und wenigstens ein innerer Heizstab 24b, der näher an der Mitte des Reaktorinnenraums 16 bezogen auf den Reaktormantel 12 vertikal angeordnet ist, gehören. Vorzugsweise sind hier ebenfalls wenigstens vier, mehr bevorzugt wenigstens sechs oder acht äußere Heizstäbe 24a in gleichmäßigem Umfangsabstand zueinander, z.B. auf einem äußeren Kreis oder Ring 25a in der Nähe des Reaktormantels 12 und wenigstens zwei, mehr bevorzugt wenigstens drei oder vier innere Heizstäbe 24b in gleichmäßigem Umfangsabstand zueinander, z.B. auf einem inneren Kreis oder Ring 25b näher zu der Mitte des Reaktors hin angeordnet, wie dies im Zusammenhang mit den Figuren 2 und 3 vorstehend beschrieben ist. Jeder Heizstab 24 weist vorzugsweise wenigstens zwei, mehr bevorzugt drei oder mehrere längliche Heizstabelemente 31, 32, 33 auf, die in Längsrichtung des Reaktors 2 hintereinander angeordnet und in ihrer Heizleistung individuell regelbar sind. Außerdem sind den Heizstäben 24, vorzugsweise jedem der Heizstabelemente 31, 32, 33, Temperatursensoren 34 zur Messung der Temperaturen an jeweiligen Stellen, verteilt in dem Reaktorinnenraum 16, zugeordnet, wobei die Temperatursensoren 34 vorzugsweise an den Heizstäben 24, z.B. in etwa in der Mitte eines jeweiligen Heizstabelementes 31, 32, 33 und vorzugsweise auch am unteren Ende 36 der Heizstäbe 24 in der Nähe der Abkühlzone 71 angeordnet sind.

Alle Heizstäbe 24 sind hier an der Seitenwand 77 an dem oberen Ende des Reaktors 2 mittels der Montageeinrichtungen 26 befestigt. Hierzu sind in der Seitenwand 77 hier nicht näher bezeichnete Aufnahmeöffnungen für die oberen Enden 37 der Heizstäbe 24 vorgesehen. Die Heizstäbe 24 sind alle an ihren oberen Endabschnitten 96 gekrümmt, zur Seite umgebogen, so dass sich die Heizstäbe 24 ausgehend von den in den Montageeinrichtungen 26 an der Seitenwand 77 aufgenommenen oberen Enden 37 über den gebogenen bzw. gekrümmten Abschnitt 96 zunächst sowohl in radialer Richtung nach innen als auch in Längsrichtung des Reaktors 2 nach unten erstrecken und in Abschnitte der Heizstäbe 24 übergehen, die alle zueinander und zu der Mantelwand 12 des Reaktors 2 parallel in Längsrichtung nach unten verlaufen. Die Heizstäbe 24 sind vorzugsweise nur in den Montageeinrichtungen 26 befestigt und ragen ansonsten freihängend in den Reaktorinnenraum 16 hinein. Zusätzliche Befestigungsmittel für die Heizstäbe 24a, 24b im Inneren des Reaktors 2 sind nicht erforderlich, so dass der Fluss der Biomasse nicht behindert wird.

Im Betrieb funktioniert die Vorrichtung 1 zur kontinuierlichen Herstellung von Pflanzenkohle durch Pyrolyse von Biomasse unter Sauerstoffabschluss der Ausführungsform gemäß den Figuren 6-8 im Wesentlichen gleich wie die Vorrichtung 1 gemäß den Figuren 1-5. Im Unterschied wird lediglich die Biomasse 64 hier über die Zuführvorrichtung 3 mit der Eintragsschleuse 43 durch das Eintragsrohr 79 mit der Eintragsschnecke 81 und über die Zugangsöffnungen 76 in der Seitenwand 77 seitlich in den Zuführbereich 161 des Reaktors 2 zugeführt. Die Zuführung der Biomasse 64 von der Seite aus ist schonender, weil die Biomasse beim Eintritt in den Zuführbereich 161 weniger aufgewirbelt wird. Auch die Anordnung der Ausleiteinrichtung 22 für das Pyrolysegas 73 oberhalb der Zugangsöffnungen 76 ist günstig, weil eine Verwirbelung der zugeführten Biomasse, die ansonsten beim Passieren der Ausleiteinrichtung 22 infolge des Absaugens des Pyrolysegases hervorgerufen werden könnte, vermieden werden kann.

Im Übrigen wird die Zuführung der Biomasse 64 zu dem Zuführbereich 161, die Betätigung der Eintragsschleuse, insbesondere der Schieber 44, 46 und die Erzeugung des Unterdrucks in dem Zuführbereich 161 durch Absaugung des Pyrolysegases 73 durch die Steuereinrichtung 61 geeignet gesteuert.

Die Biomasse 64 wandert anschließend schwerkraftbedingt in Längsrichtung des Reaktors 2 nach unten, wobei die zur Seite gebogenen Endabschnitte 96 der Heizstäbe 24 vorteilhafterweise den Materialfluss wenig behindern. Die Biomasse 64 wird dann in dem Prozessraum 162 in gesteuerter Weise, durch Steuerung der Heiztemperaturen der Heizstäbe 24 zunehmend pyrolytisch verkohlt und zu Pflanzenkohle umgesetzt. Die erzeugte Pflanzenkohle 66 wird mittels der Entnahmevorrichtung 4 über das Austragsrohr 89 mit der Austragsschnecke 91 und die Austragsschleuse 51 in einer durch die Steuereinrichtung 61 gesteuerten Weise unter Luftabschluss abgeführt.

Im Unterschied zu der Ausführungsform gemäß den Figuren 1-5 steuert die Steuereinrichtung 61 hier zusätzlich die Verteilerschnecken 94 der Verteilvorrichtung 93 an, um den Massendurchsatz der Pflanzenkohle nach Bedarf zu steuern. Insbesondere steuert die Steuereinrichtung 63 die Verteilerschnecken 94 geeignet an, um die Pflanzenkohle 66 aus dem darüber liegenden Bereich der Abkühlzone 71 zu dem unteren Sammelraum 87 des Reaktors 2 durchzulassen, aus dem die Pflanzenkohle 66 dann entnommen wird.

Falls die Steuereinrichtung 61 anhand der von den Temperatursensoren 34 gelieferten Messwerte feststellt, dass die Biomasse 64 oder die Pflanzenkohle 66 in irgendeinem Bereich des Reaktors 2 nicht die gewünschte Solltemperatur aufweist, was ein Anzeichen für eine beginnende Trichterbildung sein kann, kann die Steuereinrichtung die Verteilerschnecken 94 individuell ansteuern, um die Pflanzenkohle 66 über die Breite des Reaktorinnenraums 16, also in Querrichtung, senkrecht zu der Längs- bzw. Tiefenrichtung, nach Bedarf zu verteilen, um der Trichterbildung entgegenzuwirken.

Wird beispielsweise mit Blick auf Figur 6 oder 8 eine Trichterbildung in unmittelbarer Nähe des Reaktormantels 12 auf der rechten Seite festgestellt, kann die Steuereinrichtung 61 alle Verteilerschnecken 94 im gleichen Drehsinn, z.B. im Uhrzeigersinn, drehen lassen, damit die Pflanzenkohle zur rechten Seite des Reaktors 2 in Figur 8 hin verlagert und der beginnenden Trichterbildung schnell und effektiv entgegengewirkt wird. Die Verteilerschnecken 94 könnten auch alle im Gegenuhrzeigersinn gedreht werden. Je nach Drehsinn kann die Pflanzenkohle 66 zusätzlich senkrecht zu der in Figur 8 betrachteten Querrichtung, also nach hinten oder vorne (in Figur 8 in die Blattebene hinein oder aus dieser heraus) verlagert werden.

Wenn eine Trichterbildung in etwa in der Mitte des Reaktorinnenraums 16 auftritt, kann die Steuereinrichtung 61 z.B. die beiden in Figur 8 linken Verteilerschnecken 94 im Uhrzeigersinn und die beiden rechten Verteilerschnecken 94 im Gegenuhrzeigersinn antreiben, um die Pflanzenkohle zur Mitte des Reaktors 2 hin abzulenken. Unter anderen Bedingungen kann die Steuereinrichtung 61 unterschiedliche einzelne Verteilerschnecken 94 in einem Drehsinn und die anderen im umgekehrten Drehsinn antreiben, um eine gewünschte Verteilung der Pflanzenkohle zu bewirken. Dadurch kann der Grad der Behandlung der Biomasse 94 in dem darüber liegenden Bereich des Prozessraums 162 geeignet beeinflusst, insbesondere deren Verweildauer verlängert werden. Die individuelle Ansteuerbarkeit der Verteilerschnecken 94 der Verteilvorrichtung 93 ergibt zusätzliche Flexibilität bei der Steuerung der Verweildauer der behandelten Biomasse 64 in dem Reaktorinnenraum 16, die ansonsten in Kombination mit der Regelung der Heiztemperatur der Heizstäbe 24 in Abhängigkeit von den gemessenen Temperaturen in dem Reaktorinnenraum 12 durch eine gezielt angepasste Betätigung der Eintragsschleuse 43, der Eintragsschnecke 81, der Austragsschnecke 91 und der Austragsschleuse 51 vollkommen automatisiert erfolgt.

Im Übrigen können Weiterbildungen, die hier im Zusammenhang mit der Ausführungsform gemäß den Figuren 6-8 erwähnt sind, auch einzeln oder alle, sofern anwendbar, auf die Ausführungsform gemäß den Figuren 1-5 und umgekehrt angewandt werden.

Es ist eine Vorrichtung 1 zur kontinuierlichen Herstellung von Pflanzenkohle durch Pyrolyse von Biomasse unter Sauerstoffabschluss geschaffen. Die Vorrichtung 1 weist einen vertikal aufgestellten Reaktor 2, der einen durch einen Reaktormantel 12 umgrenzten Reaktorinnenraum 16 mit einem oberen Zuführbereich 161, einem unteren Entnahmebereich 163 und einem dazwischen befindlichen Prozessraum 162 aufweist, eine Zuführungsvorrichtung 3 zur Zuführung von Biomasse zu dem oberen Zuführbereich 161, eine Entnahmevorrichtung 4 zur Entnahme von Pflanzenkohle aus dem unteren Entnahmebereich 163 und eine in dem Reaktorinnenraum 16 positionierte Heizeinrichtung 23 auf. Die Heizeinrichtung 23 weist mehrere äußere Heizstäbe 24a, die in der Nähe des Reaktormantels 12 um den Umfang des Reaktors 2 verteilt vertikal angeordnet sind, und wenigstens einen inneren Heizstab 24b auf, der in oder nahe an der Mitte 27 des Reaktorinnenraums 16 vertikal angeordnet ist. Eine Steuereinrichtung 61 ist zur Steuerung des Betriebs der Vorrichtung 1 vorgesehen. Die Steuereinrichtung 61 steuert die Betätigung der Zuführungsvorrichtung 3 und der Entnahmevorrichtung 4 und regelt die Temperatur der Heizstäbe 24a, 24b in Abhängigkeit von an verteilten Stellen in dem Reaktorinnenraum 16 gemessenen Temperaturen, um die Verweildauer und pyrolytische Umsetzung der Biomasse in Abhängigkeit von den jeweiligen Betriebsbedingungen, Umgebungsbedingungen und der speziell verwendeten Biomasse anzupassen.

## Patentansprüche

1. Vorrichtung zur kontinuierlichen Herstellung von Pflanzenkohle durch Pyrolyse von Biomasse unter Sauerstoffabschluss, wobei die Vorrichtung (1) aufweist:
einen vertikal aufgestellten Reaktor (2), der einen durch einen Reaktormantel (12) umgrenzten Reaktorinnenraum (16) mit einem oberen Zuführbereich (161), einem unteren Entnahmebereich (163) und einem dazwischen befindlichen Prozessraum (162) aufweist;
eine Zuführungsvorrichtung (3) zur Zuführung von Biomasse zu dem Reaktorinnenraum (16) in den oberen Zuführbereich (161) ;
eine Entnahmevorrichtung (4) zur Entnahme von Pflanzenkohle aus dem Reaktorinnenraum (16) aus dem unteren Entnahmebereich (163);
eine in dem Reaktorinnenraum (16) positionierte Heizeinrichtung (23), die eine Anordnung von Heizstäben (24) aufweist, zu der gehören:
mehrere äußere Heizstäbe (24a), die in der Nähe des Reaktormantels (12) um den Umfang des Reaktors (2) verteilt vertikal angeordnet sind, und
wenigstens ein innerer Heizstab (24b), der näher an der Mitte (27) des Reaktorinnenraums (16) bezogen auf den Reaktormantel (12) vertikal angeordnet ist;
wobei jeder Heizstab (24, 24a, 24b) von den mehreren äußeren Heizstäben (24a) und dem wenigstens einen inneren Heizstab (24b) zwei oder mehrere längliche Heizstabelemente (31, 32, 33) aufweist, die in Längsrichtung des Reaktors (2) hintereinander angeordnet und in ihrer Heizleistung individuell regelbar sind; und
eine Steuereinrichtung (61) zur Steuerung des Betriebs der Vorrichtung (1), einschließlich der Betätigung der Zuführungsvorrichtung (3) und der Entnahmevorrichtung (4) und zur Steuerung der Temperatur der einzelnen Heizstabelemente (31, 32, 33) der Heizstäbe (24, 24a, 24b).

2. Vorrichtung nach Anspruch 1, wobei jeder Heizstab (24, 24a, 24b) mittels elektrischer Energie beheizbar ist und die Steuereinrichtung (61) zur individuellen Steuerung/Regelung der Heizleistung jedes der Heizstäbe (24, 24a, 24b) eingerichtet ist.

3. Vorrichtung nach Anspruch 1 oder 2, wobei wenigstens vier, vorzugsweise wenigstens sechs oder acht äußere Heizstäbe (24a) in gleichmäßigem Umfangsabstand zueinander vorgesehen sind und wenigstens zwei, vorzugsweise wenigstens drei oder vier innere Heizstäbe (24b) in gleichmäßigem Umfangsabstand zueinander vorgesehen sind.

4. Vorrichtung nach einem beliebigen der vorhergehenden Ansprüche, wobei die Anzahl der äußeren Heizstäbe (24a) wenigstens der doppelten Anzahl der inneren Heizstäbe (24b) entspricht und/oder wobei wenigstens einige der inneren Heizstäbe (24b) zu den äußeren Heizstäben (24a) in Umfangsrichtung versetzt angeordnet sind.

5. Vorrichtung nach einem beliebigen der vorhergehenden Ansprüche, wobei die Heizstäbe (24, 24a, 24b) mittels Montageeinrichtungen (26) an einer oberen Abdeckung (13) des Reaktorinnenraums (16) oder an einer oder mehreren Seitenwänden (77) in dem oberen Zuführbereich (161) des Reaktors (2) befestigt sind und freihängend in den Reaktorinnenraum (16) hineinragen.

6. Vorrichtung nach einem beliebigen der vorhergehenden Ansprüche, wobei obere Endabschnitte (37, 96) wenigstens des oder der inneren Heizstäbe (24b) zur Seite nach außen umgebogen sind.

7. Vorrichtung nach einem beliebigen der vorhergehenden Ansprüche, wobei die Vorrichtung (1) mehrere Temperatursensoren (34) zur Messung der Temperaturen an verteilten Stellen in dem Reaktorinnenraum (16) aufweist.

8. Vorrichtung nach Anspruch 7, wobei jedem Heizstab (24, 24a, 24b) wenigstens ein Temperatursensor (34) zur Messung der Temperatur in der Nähe des Heizstabs (24, 24a, 24b) zugeordnet ist.

9. Vorrichtung nach Anspruch 7 oder 8, wobei mehrere Temperatursensoren (34) unterhalb der Heizstäbe (24, 24a, 24b) angeordnet sind, um die Temperatur der erzeugten Pflanzenkohle vor der Entnahme zu messen.

10. Vorrichtung nach einem beliebigen der vorhergehenden Ansprüche, wobei jeder Heizstab (24, 24a, 24b) drei längliche Heizstabelemente (31, 32, 33) aufweist, die in Längsrichtung des Reaktors (2) hintereinander angeordnet und in ihrer Heizleistung individuell regelbar sind.

11. Vorrichtung nach einem beliebigen der vorhergehenden Ansprüche, wobei die Steuereinrichtung (61) eingerichtet ist, um die Heizleistung der übereinanderliegenden Heizstabelemente (61) im Betrieb derart zu regeln, dass in Tiefenrichtung nach unten eine zunehmend höhere Temperatur des Reaktorinnenraums (16) und in der Nähe der Entnahmevorrichtung (4) eine niedrigere Abkühltemperatur eingestellt wird.

12. Vorrichtung nach einem beliebigen der vorhergehenden Ansprüche, wobei die Zuführungsvorrichtung (3) eine Eintragsschleuse (43) und die Entnahmevorrichtung (4) eine Austragsschleuse (51) aufweist, wobei die Steuereinrichtung (61) eingerichtet ist, um die Eintragsschleuse (43) und die Austragsschleuse (51) derart zu betätigen, dass sie zeitlich versetzt zueinander, abwechselnd geöffnet werden.

13. Vorrichtung nach Anspruch 12, wobei die Eintragsschleuse (43) und die Austragsschleuse (51) jeweils einen ersten und zweiten verstellbaren Schieber (44, 46; 54, 56) aufweisen, die in Höhenrichtung im Abstand zueinander angeordnet sind und zwischen einander einen abschließbaren Schleusenraum (47; 57) definieren, wobei die Steuereinrichtung (61) eingerichtet ist, um den ersten und zweiten verstellbaren Schieber (44, 46; 54, 56) derart zu betätigen, dass sie zeitlich versetzt zueinander, abwechselnd geöffnet werden.

14. Vorrichtung nach einem beliebigen der vorhergehenden Ansprüche, wobei die Steuereinrichtung (61) eine Steuerlogik aufweist, um die Verweildauer der behandelten Biomasse in dem Reaktorinnenraum (16) als Funktion der geregelten Heiztemperatur der Heizstäbe (24, 24a, 24b) in Abhängigkeit von in dem Reaktorinnenraum (16) verteilt gemessenen Temperaturen unter Anpassung der Betätigung der Zuführungsvorrichtung (3) und der Entnahmevorrichtung (4) zu steuern.

15. Vorrichtung nach einem beliebigen der vorhergehenden Ansprüche, wobei eine Ausleiteinrichtung (22) für Pyrolysegas in dem oberen Zuführbereich (161) vorgesehen ist, wobei die Ausleiteinrichtung (22) zur Ausleitung von während des Betriebs erzeugtem Pyrolysegas aus dem Reaktorinnenraum (16) unter Erzeugung von Unterdruck in dem oberen Zuführbereich (161) eingerichtet ist.

16. Vorrichtung nach einem beliebigen der vorhergehenden Ansprüche, wobei in dem Entnahmebereich (163) oder in dessen Nähe eine steuerbare Verteilvorrichtung (93) zur Verteilung der Pflanzenkohle (66) über die Breite des Reaktorinnenraums (16) vorgesehen ist, wobei die Verteilvorrichtung (93) zwei oder mehrere individuell ansteuerbare und motorisch bewegbare Verteilermittel (94), insbesondere Verteilerschnecken, aufweist.

## Claims

1. An apparatus for the continuous production of biochar by pyrolysis of biomass under exclusion of oxygen, the apparatus (1) comprising:
a vertically mounted reactor (2) having a reactor interior (16) which is defined by a reactor shell (12) and which has an upper feed region (161), a lower removal region (163) and a process space (162) located therebetween;
a feed device (3) for feeding biomass to the reactor interior (16) into the upper feed region (161);
a removal device (4) for removing biochar from the reactor interior (16) from the lower removal region (163);
a heating device (23) positioned in the reactor interior (16), the heating device (23) comprising an array of heating rods (24) including:
a plurality of outer heating rods (24a) vertically arranged in the vicinity of the reactor shell (12) and distributed around the circumference of the reactor (2), and
at least one inner heating rod (24b) vertically arranged closer to the center (27) of the reactor interior (16) with respect to the reactor shell (12);
wherein each heating rod (24, 24a, 24b) of the plurality of outer heating rods (24a) and the at least one inner heating rod (24b) comprises two or more elongated heating rod elements (31, 32, 33) which are arranged one behind the other in the longitudinal direction of the reactor (2) and are individually controllable in their heating power; and
a control device (61) for controlling operation of the apparatus (1), including actuation of the feed device (3) and the removal device (4), and for controlling the temperature of the individual heating rod elements (31, 32, 33) of the heating rods (24, 24a, 24b).

2. The apparatus according to claim 1, wherein each heating rod (24, 24a, 24b) is heatable by means of electrical energy and the control device (61) is arranged to individually control/regulate the heating power of each of the heating rods (24, 24a, 24b).

3. The apparatus according to claim 1 or 2, wherein at least four, preferably at least six or eight outer heating rods (24a) are provided at uniform circumferential intervals from each other and at least two, preferably at least three or four inner heating rods (24b) are provided at uniform circumferential intervals from each other.

4. The apparatus according to anyone of the preceding claims, wherein the number of the outer heating rods (24a) corresponds to at least twice the number of the inner heating rods (24b) and/or wherein at least some of the inner heating rods (24b) are circumferentially offset from the outer heating rods (24a).

5. The apparatus according to anyone of the preceding claims, wherein the heating rods (24, 24a, 24b) are attached by mounting means (26) to an upper cover (13) of the reactor interior (16) or to one or more side walls (77) in the upper feed region (161) of the reactor (2) and project into the reactor interior (16) in a freely suspended manner.

6. The apparatus according to anyone of the preceding claims, wherein upper end portions (37, 96) of at least the inner heating rod or rods (24b) are bent outwardly to the side.

7. The apparatus according to anyone of the preceding claims, wherein the apparatus (1) comprises a plurality of temperature sensors (34) for measuring temperatures at distributed locations in the reactor interior (16).

8. The apparatus according to claim 7, wherein at least one temperature sensor (34) is assigned to each heating rod (24, 24a, 24b) for measuring the temperature in the vicinity of the heating rod (24, 24a, 24b).

9. The apparatus according to claim 7 or 8, wherein a plurality of temperature sensors (34) is arranged below the heating rods (24, 24a, 24b) to measure the temperature of the produced biochar prior to the removal.

10. The apparatus according to anyone of the preceding claims, wherein each heating rod (24, 24a, 24b) comprises three elongated heating rod elements (31, 32, 33) which are arranged one behind the other in the longitudinal direction of the reactor (2) and are individually controllable in their heating power.

11. The apparatus according to anyone of the preceding claims, wherein the control device (61) is arranged to regulate the heating power of the superimposed heating rod elements (61) during operation in such a way that a progressively higher temperature of the reactor interior (16) is set in the downward depth direction and a lower cooling temperature is set in the vicinity of the removal device (4).

12. The apparatus according to anyone of the preceding claims, wherein the feed device (3) comprises a feed lock (43) and the removal device (4) comprises a discharge lock (51), wherein the control device (61) is arranged to actuate the feed lock (43) and the discharge lock (51) such that they are opened alternately, offset in time from each other.

13. The apparatus according to claim 12, wherein the feed lock (43) and the discharge lock (51) each comprise a first and a second adjustable slider (44, 46; 54, 56) which are arranged at a distance from each other in the height direction and define a lockable lock space (47; 57) therebetween, wherein the control device (61) is arranged to actuate the first and second adjustable sliders (44, 46; 54, 56) in such a way that they are opened alternately, offset in time from each other.

14. The apparatus according to anyone of the preceding claims, wherein the control device (61) comprises a control logic to control the holding time of the treated biomass in the reactor interior (16) as a function of the regulated heating temperature of the heating rods (24, 24a, 24b) in dependence on temperatures measured in a distributed manner in the reactor interior (16) while adapting the actuation of the feed device (3) and the removal device (4).

15. The apparatus according to anyone of the preceding claims, wherein a discharge device (22) for pyrolysis gas is provided in the upper feed region (161), the discharge device (22) being arranged for discharging pyrolysis gas generated during operation from the reactor interior (16) while generating negative pressure in the upper feed region (161) .

16. The apparatus according to anyone of the preceding claims, wherein a controllable distribution device (93) for distributing the biochar (66) over the width of the reactor interior (16) is provided in the removal region (163) or in the vicinity thereof, wherein the distribution device (93) comprises two or more individually controllable and motor-driven movable distribution means (94), in particular distribution augers.

## Revendications

1. Dispositif de fabrication continue de charbon végétal par pyrolyse de biomasse en l'absence d'oxygène, le dispositif (1) comprenant :
un réacteur (2) qui est installé verticalement et présente un espace intérieur de réacteur (16) délimité par une enveloppe de réacteur (12) et comportant une zone d'alimentation supérieure (161), une zone de prélèvement inférieure (163) et une chambre de procédé (162) se trouvant entre les deux ;
un dispositif d'alimentation (3) destiné à amener de la biomasse à l'espace intérieur de réacteur (16), dans la zone d'alimentation supérieure (161) ;
un dispositif de prélèvement (4) destiné à prélever du charbon végétal dans l'espace intérieur de réacteur (16), dans la zone de prélèvement inférieure (163) ;
un dispositif de chauffage (23) qui est placé dans l'espace intérieur de réacteur (16) et présente un agencement de barres de chauffage (24) et comportant :
plusieurs barres de chauffage extérieures (24a) qui sont disposées verticalement à proximité de l'enveloppe de réacteur (12), sur la périphérie du réacteur (2), et
au moins une barre de chauffage intérieure (24b) qui est disposée verticalement, en étant plus proche du centre (27) de l'espace intérieur de réacteur (16), par rapport à l'enveloppe de réacteur (12) ;
chaque barre de chauffage (24, 24a, 24b) parmi la pluralité de barres de chauffage extérieures (24a) et la barre de chauffage intérieure (24b), au nombre d'au moins une, présentant deux ou plusieurs éléments de barre de chauffage (31, 32, 33) allongés qui sont disposés les uns à la suite des autres dans le sens longitudinal du réacteur (2) et dont la puissance de chauffage peut être réglée individuellement ; et
un dispositif de commande (61) destiné à commander le fonctionnement du dispositif (1), y compris l'actionnement du dispositif d'alimentation (3) et du dispositif de prélèvement (4), et à contrôler la température des différents éléments de barre de chauffage (31, 32, 33) des barres de chauffage (24, 24a, 24b).

2. Dispositif selon la revendication 1, dans lequel chaque barre de chauffage (24, 24a, 24b) peut être chauffée avec de l'énergie électrique, et le dispositif de commande (61) est conçu pour la commande/régulation individuelle de la puissance de chauffage de chacune des barres de chauffage (24, 24a, 24b).

3. Dispositif selon la revendication 1 ou 2, dans lequel au moins quatre, de préférence au moins six ou huit barres de chauffage extérieures (24a) sont prévues avec un espacement circonférentiel régulier entre elles, et au moins deux, de préférence au moins trois ou quatre barres de chauffage intérieures (24b) sont prévues avec un espacement circonférentiel régulier entre elles.

4. Dispositif selon l'une quelconque des revendications précédentes, dans lequel le nombre de barres de chauffage extérieures (24a) correspond au moins au double du nombre de barres de chauffage intérieures (24b) et/ou dans lequel au moins quelques-unes des barres de chauffage intérieures (24b) sont disposées en étant décalées dans la direction circonférentielle par rapport aux barres de chauffage extérieures (24a).

5. Dispositif selon l'une quelconque des revendications précédentes, dans lequel les barres de chauffage (24, 24a, 24b) sont fixées à l'aide de dispositifs de montage (26) à un couvercle supérieur (13) de l'espace intérieur de réacteur (16) ou à une ou plusieurs parois latérales (77), dans la zone d'alimentation supérieure (161) du réacteur (2), et avancent dans l'espace intérieur de réacteur (16) en étant suspendues librement.

6. Dispositif selon l'une quelconque des revendications précédentes, dans lequel des parties d'extrémité (37, 96) au moins de la ou des barres de chauffage intérieures (24b) sont courbées vers le côté, en direction de l'extérieur.

7. Dispositif selon l'une quelconque des revendications précédentes, dans lequel le dispositif (1) présente plusieurs capteurs de température (34) destinés à mesurer les températures à des endroits répartis dans l'espace intérieur de réacteur (16).

8. Dispositif selon la revendication 7, dans lequel est associé à chaque barre de chauffage (24, 24a, 24b), au moins un capteur de température (34) destiné à mesurer la température à proximité de la barre de chauffage (24, 24a, 24b).

9. Dispositif selon la revendication 7 ou 8, dans lequel plusieurs capteurs de température (34) sont disposés sous les barres de chauffage (24, 24a, 24b) pour mesurer la température du charbon végétal produit, avant le prélèvement.

10. Dispositif selon l'une quelconque des revendications précédentes, dans lequel chaque barre de chauffage (24, 24a, 24b) présente trois éléments de barre de chauffage (31, 32, 33) allongés qui sont disposés les uns à la suite des autres dans le sens longitudinal du réacteur (2) et dont la puissance de chauffage peut être réglée individuellement.

11. Dispositif selon l'une quelconque des revendications précédentes, dans lequel le dispositif de commande (61) est conçu pour réguler, pendant le fonctionnement, la puissance de chauffage des éléments de barre de chauffage (31, 32, 33) superposés, de manière à ce que, dans le sens de la profondeur vers le bas, une température de plus en plus élevée de l'espace intérieur de réacteur (16) et, à proximité du dispositif de prélèvement (4), une température de refroidissement plus faible soient réglées.

12. Dispositif selon l'une quelconque des revendications précédentes, dans lequel le dispositif d'alimentation (3) présente un sas d'entrée (43) et le dispositif de prélèvement (4) présente un sas de sortie (51), le dispositif de commande (61) étant conçu pour actionner le sas d'entrée (43) et le sas de sortie (51) de manière à ce qu'ils soient ouverts en alternance avec un décalage dans le temps.

13. Dispositif selon la revendication 12, dans lequel le sas d'entrée (43) et le sas de sortie (51) présentent chacun une première et une deuxième vanne (44, 46 ; 54, 56) réglable, qui sont disposées à distance l'une de l'autre, dans le sens de la hauteur, et définissent entre elles un espace de sas (47 ; 57) pouvant être fermé, le dispositif de commande (61) étant conçu pour actionner la première et la deuxième vanne (44, 46 ; 54, 56) réglables, de manière à ce qu'elles soient ouvertes en alternance avec un décalage dans le temps.

14. Dispositif selon l'une quelconque des revendications précédentes, dans lequel le dispositif de commande (61) présente une logique de commande destinée à contrôler le temps de séjour de la biomasse à traiter, dans l'espace intérieur de réacteur (16), en tant que fonction de la température de chauffage réglée des barres de chauffage (24, 24a, 24b), en fonction de températures mesurées de façon répartie dans l'espace intérieur de réacteur (16), en adaptant l'actionnement du dispositif d'alimentation (3) et du dispositif de prélèvement (4).

15. Dispositif selon l'une quelconque des revendications précédentes, dans lequel un dispositif d'évacuation (22) de gaz de pyrolyse est prévu dans la zone d'alimentation supérieure (161), le dispositif d'évacuation (22) étant conçu pour évacuer de l'espace intérieur de réacteur (16) le gaz de pyrolyse produit pendant le fonctionnement, en créant une dépression dans la zone d'alimentation supérieure (161).

16. Dispositif selon l'une quelconque des revendications précédentes, dans lequel il est prévu, dans la zone de prélèvement (163) ou à proximité de celle-ci, un dispositif de répartition (93) contrôlable, destiné à répartir le charbon végétal (66) sur la largeur de l'espace intérieur de réacteur (16), le dispositif de répartition (93) présentant deux ou plusieurs moyens de répartition (94), en particulier des vis de répartition, pouvant être activés de manière individuelle et pouvant être déplacés par moteur.
